# EUROPÄISCHE PATENTANMELDUNG

(11) **EP 4 082 648 A1**
(43) Veröffentlichungstag der Anmeldung: **02.11.2022**
(21) Anmeldenummer: 22180066.7
(22) Anmeldetag: 23.03.2016
(51) Int. Cl.: B01D 46/24

(54) **FILTERELEMENT UND FILTERANORDNUNG**

(30) Priorität: 10.04.2015 DE 102015004380
(62) Teilanmeldung aus: 18152170.9
(71) Anmelder: MANN+HUMMEL GmbH, 71636 Ludwigsburg (DE)
(72) Erfinder: STARK, Dennis, 69256 Mauer (DE); BRANDT, Beate, 68804 Altlußheim (DE)
(74) Vertreter: Mann + Hummel Intellectual Property

(57) **Zusammenfassung**

Ein Filterelement (3), das in einer Längsrichtung (LR) desselben einen ovalen Quer-schnitt aufweist, mit einer umlaufenden Dichteinrichtung (10) zum, insbesondere radialen, Abdichten des Filterelements (3) gegenüber einer Filteraufnahme (2) für das Filterelement (3), wobei die Dichteinrichtung (3) zwei einander gegenüberliegend angeordnete erste Krümmungsabschnitte (35, 36) und zwei einander gegenüberliegend angeordnete zweite Krümmungsabschnitte (38, 39) aufweist, wobei die ersten Krümmungsabschnitte (35, 36) jeweils einen ersten Krümmungsradius (R35, R36) und die zweiten Krümmungsabschnitte (38, 39) jeweils einen zweiten Krümmungsradius (R38, R39) aufweisen und wobei sich der erste Krümmungsradius (R35, R36) von dem zweiten Krümmungsradius (R38, R39) unterscheidet.

## Beschreibung

### Technisches Gebiet

Die vorliegende Erfindung betrifft ein Filterelement und eine Filteranordnung.

### Stand der Technik

Bekannte Luftfilter für Fahrzeuge können aus einem auf ein Mittelrohr aufgewickelten oder gefalteten Filtermedium gebildet sein. Insbesondere im Bereich landwirtschaftlicher Nutzfahrzeuge und Baufahrzeuge kann das Filtermedium aufgrund der starken Staubbelastung verstopfen oder beschädigt werden. Hierdurch können sich die Standzeit sowie die Filtereffizienz des Luftfilters verringern. Um die Filtereffizienz über die Standzeit des Filterelements zu gewährleisten, ist außerdem eine zuverlässige Abdichtung des Filterelements gegenüber einer Filteraufnahme erforderlich.

Die WO 2009/106591 A2 beschreibt einen Luftfilter mit Vorabscheider. Mit Hilfe des Vorabscheiders können in dem Rohgas enthaltene Partikel mittels Fliehkraft abgeschieden werden. Hierdurch kann eine Steigerung der Filtereffizienz erreicht werden, da die Partikel vor dem Erreichen des Luftfilters aus dem Rohgas abgeschieden werden. Der Luftfilter weist eine ovale Dichteinrichtung mit geraden und gekrümmten Abschnitten auf.

### Offenbarung der Erfindung

Vor diesem Hintergrund liegt der vorliegenden Erfindung die Aufgabe zugrunde, ein verbessertes Filterelement anzugeben.

Demgemäß wird ein Filterelement, das in einer Längsrichtung desselben einen ovalen Querschnitt aufweist, vorgeschlagen. Das Filterelement umfasst eine umlaufende Dichteinrichtung zum, insbesondere radialen, Abdichten des Filterelements gegenüber einer Filteraufnahme für das Filterelement, wobei die Dichteinrichtung zwei einander gegenüberliegend angeordnete erste Krümmungsabschnitte und zwei einander gegenüberliegend angeordnete zweite Krümmungsabschnitte aufweist, wobei die ersten Krümmungsabschnitte jeweils einen ersten Krümmungsradius und die zweiten Krümmungsabschnitte jeweils einen zweiten Krümmungsradius aufweisen und wobei sich der erste Krümmungsradius von dem zweiten Krümmungsradius unterscheidet. Eine Konstruktion der Dichtung ausschließlich mit zwei verschiedenen Radien, die jeweils über die einzelnen Krümmungsabschnitte vollständig oder zumindest im Wesentlichen konstant sind, kann Vorteile hinsichtlich der Werkzeugherstellung und der Qualitätskontrolle haben.

Der zweite Krümmungsradius kann gegen unendlich gehen, d.h. auch gerade ausgeführt sein, dies trifft analog auch auf eine Ovalform des Filterelements zu. In einer Ausführungsform weist die Dichteinrichtung eine im Wesentlichen stadionartige Geometrie auf. Es hat sich als vorteilhaft erwiesen, dass die Dichteinrichtung keine geraden Abschnitte sondern nur gekrümmte Abschnitte aufweist. Dies kommt insbesondere dann zum Tragen, wenn das Filterelement bzw. der aus einem Filtermedium gebildete Filterkörper einen ovalen Querschnitt aufweist, dessen Außenkontur teilweise gerade oder schwach gekrümmte Abschnitte aufweist. Dadurch, dass die Dichteinrichtung im Wesentlichen ausschließlich gekrümmte Abschnitte aufweist, kann über den gesamten Umfang der Dichteinrichtung ein konstanter Anpressdruck der Dichteinrichtung gegen einen Eingriffsbereich der Filteraufnahme erreicht werden. Die Dichteinrichtung ist vorzugsweise dazu eingerichtet, das Filterelement bezüglich der Filteraufnahme radial nach innen abzudichten. Stärkere Krümmungen bzw. kleinere Radien an der Dicht-einrichtung sind bei radialer Abdichtung nach innen oder außen vorteilhafter als schwächere Krümmungen bzw. größere Radien, da mit zunehmender Krümmung die Gefahr abnimmt, dass die Dichteinrichtung bei Vibrationsbelastung den Kontakt zu einer Filteraufnahmeseitigen Dichtungsanlagefläche verliert. Die Dichteinrichtung kann alternativ oder zusätzlich auch dazu eingerichtet sein, das Filterelement bezüglich der Filteraufnahme axial abzudichten. Unter "nach innen" ist vorliegend eine radial auf einen Fluidauslass der Filteraufnahme zu orientierte Richtung zu verstehen. Die Dichteinrichtung ist vorzugsweise federelastisch verformbar. Das Filterelement kann ein Sekundärelement räumlich umgeben. Die Dichteinrichtung läuft bevorzugt um eine erste Endscheibe des Filterelements vollständig um. Das Filterelement ist vorzugsweise ein Luftfilter zum Filtern von Ansaugluft für eine Brennkraftmaschine. Vorzugsweise findet das Filterelement in Kraftfahrzeugen, Lastkraftwagen, Baufahrzeugen, Wasserfahrzeugen, Schienenfahrzeugen, landwirtschaftlichen Maschinen bzw. Fahrzeugen oder Luftfahrzeugen Anwendung.

Nach dem Gedanken der Erfindung ist es vorteilhaft, aber nicht zwingend erforderlich, einen Verlauf der Dichtungseinrichtung zu wählen, welcher insbesondere ausschließlich aus Kreisabschnitten gebildet ist. Ein wesentlicher Vorteil entsteht nämlich dadurch, dass die Dichteinrichtung nur gekrümmte Abschnitte aufweist, insbesondere durchgehend in eine Richtung gekrümmt, so dass eine durchgehend konvexe Außenkontur ohne gerade oder konkave Abschnitte entsteht. Daher betrifft die Erfindung etwas allgemeiner gefasst auch ein Filterelement, aufweisend einen durch einen Filterkörper aus einem Filtermedium definierten ovalen Querschnitt mit zwei ersten gegenüberliegenden Krümmungsabschnitten mit stärkerer Krümmung, die durch zwei zweite gegenüberliegende, verglichen mit den ersten Krümmungsabschnitten geringer gekrümmten Krümmungsabschnitten miteinander verbunden sind, das Filterelement weiter aufweisend eine oval umlaufende Dichteinrichtung zum insbesondere radialen Abdichten des Filterelementes gegenüber einer Filteraufnahme, wobei die Dichteinrichtung zwei einander gegenüberliegend angeordnete erste Krümmungsabschnitte mit stärkerer Krümmung und zwei einander gegenüberliegend angeordnete, verglichen mit den ersten Krümmungsabschnitten geringer gekrümmte zweite Krümmungsabschnitte aufweist, wobei die zweiten Krümmungsabschnitte der Dichteinrichtung stärker gekrümmt sind als die zweiten Krümmungsabschnitte des durch den Filterkörper definierten ovalen Querschnittes. Die ersten Krümmungsabschnitte sind bevorzugt derart durch die zweiten Krümmungsabschnitte miteinander verbunden, dass erste und zweite Krümmungsabschnitte jeweils ineinander übergehen, insbesondere direkt ineinander übergehen, bevorzugt stetig und weiter bevorzugt glatt ineinander übergehen. Dies hat zum Beispiel zur Folge, dass im Übergangsbereich zwischen ersten und zweiten Krümmungsabschnitten kein weiterer Krümmungsabschnitt mit einer Krümmung vorhanden sein kann, die größer ist als die Krümmung der zwei ersten Krümmungsabschnitte. Dies hat den Vorteil, dass trotz der nicht kreisrunden Form eine umlaufend gute Dichtwirkung sicher gestellt werden kann.Bevorzugt wird für die Dichteinreichung und/oder den Filterkörper und/oder mindestens eine der Endscheiben ein ovaler Querschnitt oder Verlauf gewählt, der einen Mittelpunkt und zwei sich in diesem schneidende Symmetrieachsen aufweist und/oder ein Breiten- zu Höhen-Verhältnis von mehr als 1,5:1, bevorzugt mehr als 2:1, weiter bevorzug kleiner 5:1 oder 4:1, besonders bevorzugt kleiner 3:1, aufweist. Besonders vorteilhaft für eine Vorabscheidewirkung durch Fliehkraft sind Breiten- zu Höhen-Verhältnisse des Filterelements und/oder Filterkörpers im Bereich zwischen 1,5:1 und 3:1. Besonders bevorzugt weisen Filterkörper und Dichteinrichtung die gleichen Symmetrieachsen auf. Besonders bevorzugt weist das Filterelement eine Symmetrie-Längsachse auf, zu welcher die Dichteinrichtung und/oder der Filterkörper und/oder mindestens eine Endscheibe mindestens im Wesentlichen symmetrisch sind. Diese Symmetrie-Längsachse verläuft bevorzugt durch den Schnittpunkt der oben genannten, sich schneidenden Symmetrieachsen, bevorzugt jeweils senkrecht zu diesen. Die Symmetrie-Längsachse ist bevorzugt koaxial mit der Mittelachse von Filteraufnahme und/oder Filterelement bzw. kann durch diese definiert sein.

Besonders bevorzugt ist in allen Ausführungsformen, dass die zweiten Krümmungsabschnitte der Dicht-einrichtung und die zweiten Krümmungsabschnitte des durch den Filterkörper definierten ovalen Querschnittes benachbart zueinander angeordnet sind, d. h. im Wesentlichen in Bezug auf die Ovalform die gleiche Winkelposition aufweisen. Gleiches gilt für die ersten, stärker als die zweiten gekrümmten Krümmungsabschnitte von Dichteinrichtung und durch den Filterkörper definiertem Querschnitt.

Bei Ausführungsformen sind Krümmungsmittelpunkte der ersten Krümmungsradien auf einer ersten Geraden angeordnet, wobei Krümmungsmittelpunkte der zweiten Krümmungsradien auf einer zweiten Geraden angeordnet sind und wobei die erste Gerade senkrecht zu der zweiten Geraden positioniert ist. Vorzugsweise sind die zweiten Krümmungsradien größer als die ersten Krümmungsradien. Die ersten Krümmungsradien sind vorzugsweise gleich groß. Die zweiten Krümmungsradien sind vorzugsweise gleich groß.

Bei weiteren Ausführungsformen ist die zweite Gerade mittig zwischen den Krümmungsmittelpunkten der ersten Krümmungsradien und/oder die erste Gerade ist mittig zwischen den Krümmungsmittelpunkten der zweiten Krümmungsradien angeordnet. Endpunkte der Geraden werden jeweils durch die Krümmungsmittelpunkte definiert. Vorzugsweise teilt die erste Gerade die zweite Gerade mittig und umgekehrt.

Ein Filterelement gemäß der Erfindung weist bevorzugt einen aus einem Filtermedium gebildeten Filterkörper auf. Der Filterkörper ist bevorzugt radial von außen nach innen oder umgekehrt durchströmbar. Der Filterkörper kann bevorzugt durch ein zickzackförmig gefaltetes, ringförmig geschlossenes Filtermedium gebildet sein und eine kreisrunde, ovale oder elliptische Form aufweisen. Ferner kann der Filterkörper gebildet sein aus einem rohrförmigen, insbesondere mehrlagigen Wickel eines Filtermediums. Alternativ kann der Filterkörper als axial durchströmbarer Filterkörper ausgebildet sein, beispielsweise durch einen insbesondere ovalen Wickel aus einem Halbzeug mit zwei Filtermedienlagen, einer Welllage und einer Glattlage, die wechselseitig verschlossene Kanäle bilden.

Bei weiteren Ausführungsformen weist das Filterelement mindestens eine Endscheibe und ein mit der Endscheibe verbundenen Filterkörper auf, wobei die Dichteinrichtung auf einer dem Filterkörper abgewandten Vorderseite der insbesondere offenen Endscheibe vorgesehen ist. Die Endscheibe ist vorzugsweise eine erste Endscheibe des Filterelements. Vorzugsweise weist das Filterelement zwei Endscheiben auf, zwischen denen der Filterkörper angeordnet ist. Die Dichteinrichtung kann materialeinstückig mit der ersten Endscheibe ausgebildet sein. Die zweite Endscheibe kann bevorzugt geschlossen ausgeführt sein.

Bei weiteren Ausführungsformen ist eine Außenkontur und/oder Innenkontur der Dichteinrichtung nicht parallel zu einer Außenkontur und/oder Innenkontur der Endscheibe angeordnet. Vorzugsweise folgt die Außen- oder Innenkontur der Dichteinrichtung nicht der Außen- oder Innenkontur der Endscheibe, d. h. der Abstand der Außenkontur der Dichteinrichtung von der Außenkontur der Endscheibe ist nicht konstant. Weiter bevorzugt folgt die Dichtfläche, d.h. die Anlagefläche der Dichteinrichtung zur dichtenden Anlage an eine korrespondierende Dichtungsanlagefläche des Gehäuses, nicht der Außenkontur der Endscheibe. Für den Fall einer Radialdichtung betrifft dies in der Regel die radiale Innenfläche der Dichteinrichtung, es kann jedoch auch die radiale Außenfläche der Dichteinrichtung die Dichtfläche bilden. Besonders bevorzugt weist die Dichteinrichtung, insbesondere die Innenfläche der Dichtung, in der Mitte der geringer gekrümmten Krümmungsabschnitte des Filterkörpers und/oder der Dichteinrichtung einen geringeren Abstand zur äußeren (insbesondere radial äußeren) Mantelfläche des Filterkörpers und/oder der Außenkontur einer offenen Endscheibe auf als im Übergangsbereich zwischen stark und gering gekrümmten Krümmungsabschnitten des Filterkörpers und/oder der Dichteinrichtung. Dadurch kann die Krümmung der Dichtung im schwach gekrümmten Bereich des Filterkörpers verstärkt und damit in Bezug auf die Zuverlässigkeit der Dichtung bei Vibrationsbelastung optimiert werden. Dies hat bevorzugt geometrisch zur Folge, dass die Krümmung der zweiten Krümmungsabschnitte der Dichtung auch nicht durch eine maßstäbliche Vergrößerung/Verkleinerung (zentrische Streckung) der Außenkontur der offenen Endscheibe und/oder des Filterkörpers konstruierbar ist. Vielmehr bedeutet dies bevorzugt, dass die Krümmung der zweiten Krümmungsabschnitte der Dichtung stärker ist als die Krümmung einer vergleichbaren, insbesondere zur Außenkontur von Filterkörper und/oder offener Endscheibe parallelen, insbesondere konzentrischen und insbesondere aus der Außenkontur durch maßstäbliche Verkleinerung erhaltenen oder innerhalb der Außenkontur und parallel zu dieser verlaufenden Vergleichskurve, die in der Mitte der zweiten Krümmungsabschnitte von Dichtung, Außenkontur der Endscheibe und/oder Außenkontur des Filterkörpers zumindest im Wesentlichen den gleichen Abstand zur Außenkontur von Endscheibe und/oder Filterkörper aufweist.

In einer vorteilhaften Ausführungsform ist die Dichteinrichtung innerhalb einer gedachten axialen Fortsetzung der äußeren Mantelfläche des Filterkörpers und/oder der Außenkontur einer offenen Endscheibe in Längsrichtung angeordnet. Dies hat den Vorteil, dass die Dichteinrichtung radial zur Längsrichtung keinen zusätzlichen Bauraum erfordert und direkt, beispielsweise einstückig oder materialeinheitlich mit der Endscheibe ausgebildet sein kann. Wird als Filterkörper ein ringförmig geschlossener, zickzackförmig bzw. sternförmig gefalteter Filterbalg aus einem Filtermedium verwendet, kann es besonders vorteilhaft sein, dass die Dichteinrichtung innerhalb eines Querschnitts des Filterkörpers (genauer innerhalb einer gedachten axialen Fortsetzung des Querschnittes in Längsrichtung) angeordnet ist. Dies hat den Vorteil, dass der Querschnitt des Abströmweges aus dem Filterelement nicht durch die Dichteinrichtung unnötig reduziert wird, was den Strömungswiderstand erhöhen würde.

Bei weiteren Ausführungsformen weist das Filterelement einen den Filterkörper zumindest abschnittsweise umhüllenden Anströmschutz auf. Mit Hilfe des Anströmschutzes wird verhindert, dass in dem zu filternden Fluid enthaltene Partikel, wie beispielsweise kleine Steine, direkt auf das Filtermedium auftreffen. Hierdurch wird eine Beschädigung des Filtermediums verhindert. Dies erhöht die Standzeit des Filterelements.

Bei weiteren Ausführungsformen ist der Anströmschutz mit dem Filterkörper verklebt, verschweißt oder verschmolzen. Der Anströmschutz liegt alternativ bündig und bevorzugt lose auf dem Filtermedium, insbesondere den Faltkanten des Filtermediums, auf. Insbesondere ist der Anströmschutz benachbart zu einer ersten Endscheibe des Filterelements angeordnet. Der Anströmschutz kann mit der ersten Endscheibe verbunden, beispielsweise in von deren Material teilweise formschlüssig umschlossen sein. Hierdurch kann der Anströmschutz mittels des Endscheibenmaterials, insbesondere Polyurethan oder Polyurethanschaum, mit dem Filterkörper fest verbunden sein.

Bei weiteren Ausführungsformen ist der Anströmschutz fluiddicht. Der Anströmschutz kann eine Folie sein. Alternativ kann der Anströmschutz fluiddurchlässig sein. Beispielsweise kann der Anströmschutz aus einem feinmaschigen Netz oder Gitter gefertigt sein. Vorzugsweise ist der Anströmschutz aus einem Kunststoffmaterial gefertigt.

Der Anströmschutz läuft bevorzugt vollständig einmal insbesondere ringförmig geschlossen um den Filterkörper um. Dadurch kann gewährleistet werden, dass ein aufgrund der Symmetrie in zwei Positionen einbaubares Filterelement in beiden Positionen vor einer frontalen Anströmung durch einen Fluideinlass geschützt ist und/oder dass in beiden möglichen Einbaupositionen in gleicher Weise die Ausbildung einer für die Vorabscheidung wichtigen, um das Filterelement herum rotierende Rohfluidströmung ausgebildet werden kann. Dabei sollte sich der Anströmschutz bevorzugt vollumfänglich, zumindest jedoch in den einer direkten Anströmung aussetzbaren Bereichen axial von der ersten Endscheibe so weit über den Filterkörper erstrecken, dass die axiale Erstreckung des Fluideinlasses eines Filtergehäuses überdeckt ist. Dies ist je nach Auslegung des Filtersystems der Fall, wenn sich der Anströmschutz über mindestens 15, 20 oder 25 % der axialen Länge des Filterkörpers und/oder maximal 80, 70, 60, 50, 40 oder 30 % der axialen Länge des Filterkörpers erstreckt.

Weiterhin wird eine Filteranordnung mit einer derartigen Filteraufnahme und einem derartigen Filterelement vorgeschlagen, das in einem Aufnahmeabschnitt der Filteraufnahme aufgenommen ist.

Bei Ausführungsformen weist der Aufnahmeabschnitt einen Eingriffsbereich auf, in den eine umlaufende Dichteinrichtung des Filterelements eingreift, wobei die Dichteinrichtung mit einer Innenfläche an dem Eingriffsbereich anliegt. Der Eingriffsbereich ist vorzugsweise um einen Fluidauslass der Filteraufnahme umlaufend vorgesehen. Die Dichteinrichtung liegt vorzugsweise innenseitig an dem Eingriffsbereich an.

Weiterhin wird eine Filteraufnahme für ein Filterelement, das quer zu einer Längsrichtung desselben einen ovalen Querschnitt aufweist, vorgeschlagen. Die Filteraufnahme umfasst einen Aufnahmeabschnitt zum Aufnehmen des Filterelements, einen Fluideinlass zum Einlass von zu filterndem Fluid in die Filteraufnahme und einen Fluidauslass zum Auslass des mit Hilfe des Filterelements gefilterten Fluids aus der Filteraufnahme, wobei der Fluideinlass so angeordnet ist, dass eine Einströmrichtung des zu filternden Fluids in Richtung einer Mantelfläche des in dem Aufnahmeabschnitt aufnehmbaren Filterelements orientiert ist, so dass das zu filternde Fluid das in dem Aufnahmeabschnitt aufnehmbare Filterelement tangential umströmt, um an einer Wandung des Aufnahmeabschnitts in dem zu filternden Fluid enthaltene Partikel mit Hilfe von Fliehkraft abzuscheiden. Die Filteraufnahme kann auch als Gehäuse oder Filtergehäuse bezeichnet werden.

Dadurch, dass die Einströmrichtung in Richtung auf das Filterelement zu orientiert ist, wird das Filterelement im Vergleich zu bekannten Anordnungen direkt angeströmt. Da die Filteraufnahme selbst als Vorabscheider, insbesondere als Fliehkraftabscheider, wirkt, kann auf zusätzliche Vorabscheider, die stromaufwärts des Filterelements angeordnet sind, verzichtet werden. Hieraus ergibt sich ein Kostenvorteil gegenüber bekannten Anordnungen. Die insbesondere ovale Querschnittsgeometrie des Aufnahmeabschnitts führt im Vergleich zu einer kreisrunden Querschnittsgeometrie zu einem günstigen Vorabscheidegrad der Partikel. Weiterhin können aufgrund der ovalen Querschnittsgeometrie bei gleichem Bauvolumen auch schmale oder rechteckige Bauräume zum Aufnehmen der Filteraufnahme genutzt werden. Insbesondere wird die Filteraufnahme so angeordnet, dass eine Breitenrichtung des Aufnahmeabschnitts horizontal positioniert ist. Vorzugsweise ist die Einströmrichtung des zu filternden Fluids so orientiert, dass das Fluid direkt auf eine Krümmung der Wandung des Aufnahmeabschnitts trifft. Hierdurch wird das Fluid stark beschleunigt. Dies führt im Vergleich zu einem Aufnahmeabschnitt mit kreisrundem Querschnitt zu einem günstigen Vorabscheidegrad. Unter oval kann vorliegend eine rechteckige Geometrie mit abgerundeten Ecken, eine zumindest näherungsweise elliptische Geometrie oder eine aus mehreren Krümmungsabschnitten oder Kreisabschnitten gebildete Geometrie verstanden werden. Bevorzugt wird sowohl für Filteraufnahme als auch für aufzunehmende Filterelemente und/oder deren Dichteinrichtung vorliegend eine ovale Form mit zwei Symmetrieachsen, die sich insbesondere orthogonal in einem Mittelpunkt schneiden, durch welchen senkrecht zu den beiden Symmetrieachsen eine Mittelachse von Filteraufnahme und/oder Filterelement(en) verläuft. Elliptische Formen können auch durch Näherungskonstruktionen von Ellipsen, wie beispielsweise über Krümmungskreise oder nach de la Hire erzeugt sein. Vorzugsweise weist der Aufnahmeabschnitt ein erstes und ein zweites Gehäuseteil auf, die mit Hilfe von Befestigungsmitteln miteinander verbunden sein können. Die Gehäuseteile können aus einem Kunststoffmaterial gefertigt sein. Vorzugsweise sind die Gehäuseteile Kunststoffspritzgussbauteile. Die Gehäuseteile können alternativ auch aus Blech gefertigt sein. Der Aufnahmeabschnitt kann auch einteilig ausgebildet sein. Das heißt, die Gehäuseteile können einstückig miteinander verbunden sein. Die Partikel können beispielsweise Sand, Staub, Pflanzenteile oder dergleichen sein.

Bei Ausführungsformen ist die Einströmrichtung des zu filternden Fluids senkrecht zu der Längsrichtung des in dem Aufnahmeabschnitt aufnehmbaren Filterelements orientiert. Hierdurch strömt das zu filternde Fluid teilweise in den Zwischenraum zwischen Aufnahmeabschnitt und Filterelement sowie optional zumindest teilweise auch direkt auf das Filterelement und umströmt dieses vorzugsweise schraubenförmig.

Bei weiteren Ausführungsformen ist der Aufnahmeabschnitt dazu eingerichtet, das Filterelement bezüglich einer Längsrichtung desselben mittig in dem Aufnahmeabschnitt aufzunehmen. Eine zweite Endscheibe des Filterelements kann Verspannelemente aufweisen, mit Hilfe derer das Filterelement optimal in dem Aufnahmeabschnitt positionierbar ist. Die elastisch verformbaren Verspannelemente dienen weiterhin der Schwingungsdämpfung und/oder dem Toleranzausgleich.

Bei weiteren Ausführungsformen ist der Aufnahmeabschnitt dazu eingerichtet, das Filterelement so aufzunehmen, dass senkrecht zur äußeren Mantelfläche des Filterelements und/oder senkrecht zur inneren Wandung des Aufnahmeabschnitts umlaufend um das Filterelement ein gleichbleibender Abstand zwischen dem Filterelement und der Wandung des Aufnahmeabschnitts vorgesehen ist. Der Abstand ist bevorzugt über die Längsrichtung im Wesentlichen oder vollständig konstant, kann aber auch in Längsrichtung variieren. Beispielsweise kann sich der Abstand in Längsrichtung verkleinern oder vergrößern. Das Filterelement kann hierzu beispielsweise in Längsrichtung konisch in oder entgegen der Ausströmrichtung zulaufend sein.

Das Filterelement kann in Längsrichtung konisch zulaufend sein.

Bei weiteren Ausführungsformen weist der Aufnahmeabschnitt im Querschnitt eine Breitenrichtung und eine Höhenrichtung auf, die bevorzugt mit Symmetrieachsen der Ovalform übereinstimmen, wobei der Fluideinlass so eingeordnet ist, dass die Einströmrichtung des Fluids senkrecht zur Breitenrichtung angeordnet ist. Vorzugsweise ist der Fluideinlass seitlich an dem Aufnahmeabschnitt angeordnet, so dass das einströmende Fluid auf die Wandung des Aufnahmeabschnitts trifft.

Bei weiteren Ausführungsformen ist dabei eine Ausdehnung des Aufnahmeabschnitts in der Breitenrichtung größer als in der Höhenrichtung. Beispielsweise ist der Aufnahmeabschnitt mindestens 1,5-mal und bevorzugt zwei- bis dreimal breiter als hoch. Bevorzugt ist dabei das Breiten- zu Höhenverhältnis des für die Aufnahme im Aufnahmeabschnitt vorgesehenen Filterelementes größer als das Breiten- zu Höhenverhältnis des Aufnahmeabschnittes. Weiter bevorzugt weist ein passendes Filterelement ein derart ähnliches Höhen- zu Breiten-Verhältnis und insbesondere eine Form derart auf, dass senkrecht zur äußeren Mantelfläche des Filterelements und/oder senkrecht zur inneren Wandung des Aufnahmeabschnitts umlaufend um das Filterelement ein gleichbleibender Abstand zwischen dem Filterelement und der Wandung des Aufnahmeabschnitts vorgesehen ist.

Bei weiteren Ausführungsformen weist der Fluideinlass einen ovalen Querschnitt mit einer parallel zur Längsachse der Filteraufnahme größeren Durchmesser als senkrecht zur Längsachse auf. Hierdurch kann ein geringer Druckverlust beim Einströmen des zu filternden Fluids in den Fluideinlass erreicht werden. Alternativ kann der Fluideinlass einen kreisrunden Querschnitt aufweisen.

Bei weiteren Ausführungsformen umfasst die Filteraufnahme einen abnehmbaren Wartungsdeckel, der eine Partikelaustragsöffnung aufweist. Der Wartungsdeckel ist vorzugsweise ein Kunststoffspritzgussbauteil. Der Wartungsdeckel kann auch aus einem Blech gefertigt sein. Der Wartungsdeckel kann mit Schnellverschlüssen an dem Aufnahmeabschnitt befestigt sein. Die Partikelaustragsöffnung kann ein Ventil aufweisen.

Bei weiteren Ausführungsformen weist der Wartungsdeckel einen rohrförmigen, insbesondere oval-rohrförmigen Anströmschutz auf, der insbesondere in den Innenraum der Filteraufnahme hineinragt und in dem das Filterelement zumindest teilweise und bevorzugt koaxial aufnehmbar ist. Der Anströmschutz ist vorzugsweise materialeinstückig mit dem Wartungsdeckel ausgebildet. Die Länge des Anströmschutzes ist bevorzugt so ausgelegt, dass er das Filterelement auf etwa 15-50%, bevorzugt 20-40% dessen Gesamtlänge in Längsrichtung ausgehend von der geschlossenen Endscheibe umgibt, d.h. die Länge des Anströmschutzes in Längsrichtung beträgt ca. 15-50%, bevorzugt 20-40% der Länge des Filterelementes.

Weiterhin wird ein Filterelement, das quer zu einer Längsrichtung desselben einen ovalen Querschnitt aufweist, vorgeschlagen. Das Filterelement umfasst eine erste Endscheibe, eine zweite Endscheibe und einen zwischen der ersten Endscheibe und der zweiten Endscheibe angeordneten Filterkörper, wobei das Filterelement einen Anströmschutz aufweisen kann, der den Filterkörper zumindest teilweise bedeckt. Das Filterelement kann sowohl weiter oben als auch unten oder in den Ansprüchen genannte Merkmale aufweisen.

Der Anströmschutz kann auch auch an dem Aufnahmeabschnitt vorgesehen sein. Mit Hilfe des Anströmschutzes wird verhindert, dass in dem zu filternden Fluid enthaltene Partikel, wie beispielsweise Sand, direkt auf das Filtermedium auftreffen. Hierdurch wird eine Beschädigung des Filtermediums verhindert. Dies erhöht die Standzeit des Filterelements. Das Filterelement ist vorzugsweise ein Luftfilter zum Filtern von Ansaugluft für eine Brennkraftmaschine. Vorzugsweise findet das Filterelement in Kraftfahrzeugen, Lastkraftwagen, Baufahrzeugen, Wasserfahrzeugen, Schienenfahrzeugen, landwirtschaftlichen Maschinen bzw. Fahrzeugen oder Luftfahrzeugen Anwendung. Das Filtermedium ist vorzugsweise zickzackförmig gefaltet. Das Filtermedium ist beispielsweise ein Filterpapier, ein Filtergewebe, ein Filtergelege oder ein Filtervlies. Insbesondere kann das Filtermedium in einem Spinnvlies- oder Meltblown-Verfahren hergestellt sein. Weiter kann das Filtermedium verfilzt oder vernadelt sein. Das Filtermedium kann

Naturfasern, wie Cellulose oder Baumwolle, oder Kunstfasern, beispielsweise aus Polyester, Polyvinylsulfit oder Polytetrafluorethylen, aufweisen. Die Fasern können bei der Verarbeitung in, schräg und/oder quer zur Maschinenrichtung oder ungeordnet orientiert sein. Das Filtermedium kann mit den Endscheiben verschmolzen, verklebt oder verschweißt sein

Bei Ausführungsformen ist der Anströmschutz mit dem aus dem Filtermedium gebildeten Filterkörper verklebt, verschweißt oder verschmolzen. Der Anströmschutz liegt alternativ bündig und bevorzugt lose auf dem Filtermedium, insbesondere den Faltkanten des Filtermediums, auf. Insbesondere ist der Anströmschutz benachbart zu einer ersten Endscheibe des Filterelements angeordnet. Der Anströmschutz kann mit der ersten Endscheibe verbunden, beispielsweise in von deren Material teilweise formschlüssig umschlossen sein.

Bei weiteren Ausführungsformen ist der Anströmschutz fluiddicht. Der Anströmschutz kann eine Folie sein. Alternativ kann der Anströmschutz fluiddurchlässig sein. Beispielsweise kann der Anströmschutz aus einem feinmaschigen Netz oder Gitter gefertigt sein. Vorzugsweise ist der Anströmschutz aus einem Kunststoffmaterial gefertigt.

Bei weiteren Ausführungsformen umgibt das Filterelement ein Sekundärelement, das ebenfalls in der Filteraufnahme aufnehmbar ist. Das Filterelement kann auch als erstes Filterelement und das Sekundärelement kann als zweites Filterelement bezeichnet werden. Die erste Endscheibe des Filterelements weist bevorzugt eine Aufnahmeöffnung auf, in die das Sekundärelement einschiebbar ist. Diese Aufnahmeöffnung stellt gleichzeitig bevorzugt den Ausströmquerschnitt des ersten Filterelementes dar.

Bei weiteren Ausführungsformen weist das Filterelement eine an der bevorzugt offen ausgeführten ersten Endscheibe vorgesehene Dichteinrichtung auf, wobei die Dichteinrichtung dazu eingerichtet ist, das Filterelement bezüglich einer Filteraufnahme insbesondere radial oder axial abzudichten, derart, dass die in Anströmseite oder Rohseite des Filterelements von der Abströmseite oder Reinseite getrennt ist. Vorzugsweise ist die Dichteinrichtung materialeinstückig mit der ersten Endscheibe ausgebildet. Insbesondere können die erste Endscheibe und die Dichteinrichtung aus einem insbesondere gegossenen Polyurethanwerkstoff, insbesondere einem gehschäumten Polyurethanwerkstoff, gefertigt sein. Die Dichteinrichtung ist vorzugsweise federelastisch verformbar. Die Dichteinrichtung ist vorzugsweise dazu eingerichtet, das Filterelement bezüglich der Filteraufnahme radial nach innen, das heißt, in Richtung auf einen Fluidauslass der Filteraufnahme zu abzudichten und weist dazu bevorzugt eine nach innen gerichtete, ringförmig geschlossene, insbesondere ovale Dichtfläche auf. Die Dichteinrichtung kann auch dazu eingerichtet sein, das Filterelement axial gegenüber der Filteraufnahme abzudichten.

Weiterhin wird eine Filteranordnung mit einer derartigen Filteraufnahme und einem in einem Aufnahmeabschnitt der Filteraufnahme aufgenommenen derartigen Filterelement vorgeschlagen, wobei ein Fluideinlass der Filteraufnahme so angeordnet ist, dass eine Einströmrichtung des zu filternden Fluids in Richtung einer Mantelfläche des in dem Aufnahmeabschnitt aufgenommenen Filterelements orientiert ist, so dass das zu filternde Fluid das in dem Aufnahmeabschnitt aufgenommene Filterelement tangential und/oder schraubenförmig, insbesondere ovalschraubenförmig, umströmt, um an einer Wandung des Aufnahmeabschnitts in dem zu filternden Fluid enthaltene Partikel mit Hilfe von Fliehkraft abzuscheiden.

Vorzugsweise ist die Einströmrichtung des zu filternden Fluids so orientiert, dass das Fluid direkt auf eine Krümmung der Wandung des Aufnahmeabschnitts trifft. Hierdurch wird das Fluid stark beschleunigt, wodurch die auf das Fluid wirkenden Fliehkräfte vergrößert werden. Dies begünstigt den Vorabscheidegrad der Partikel. Die Filteranordnung kann auch als Zweistufenfilter bezeichnet werden, wobei die erste Stufe durch die Fliehkraftabscheidung und die zweite Stufe durch ein Filterelement gebildet sind.

Weiterhin wird eine Filteraufnahme für ein insbesondere erfindungsgemäßes Filterelement, das quer zu einer Längsrichtung desselben einen ovalen Querschnitt aufweist, vorgeschlagen. Die Filteraufnahme umfasst einen Aufnahmeabschnitt zum Aufnehmen des Filterelements, einen Fluideinlass zum Einlass von zu filterndem Fluid in die Filteraufnahme und einen Fluidauslass zum Auslass des mit Hilfe des Filterelements gefilterten Fluids aus der Filteraufnahme, wobei der Fluideinlass so angeordnet ist, dass eine Einströmrichtung des zu filternden Fluids in den Fluideinlass parallel zu der Längsrichtung des Filterelements orientiert ist, wobei der Fluideinlass ein Leitelement aufweist, das dazu eingerichtet ist, das zu filternde Fluid beim Einströmen in den Fluideinlass derart abzulenken, dass dieses das in dem Aufnahmeabschnitt aufnehmbare Filterelement spiralförmig umströmt, um an einer Wandung des Aufnahmeabschnitts in dem zu filternden Fluid enthaltene Partikel mit Hilfe von Fliehkraft abzuscheiden.

Das Leitelement kann eine Leitschaufel sein. Dadurch, dass das zu filternde Fluid das Filterelement spiralförmig, schraubenförmig oder helixförmig umströmt, wirkt die Filteraufnahme als Vorabscheider zum Abscheiden der Partikel. Auf zusätzliche Vorabscheider kann dadurch verzichtet werden. Hierdurch kann die Filteraufnahme besonders kostengünstig hergestellt werden. Die Filteraufnahme weist vorzugsweise einen ovalen Querschnitt auf. Die vorzugsweise ovale Querschnittsgeometrie des Aufnahmeabschnitts führt im Vergleich zu einer kreisrunden Querschnittsgeometrie zu einem günstigen Vorabscheidegrad der Partikel. Weiterhin können aufgrund der ovalen Querschnittsgeometrie auch schmale oder rechteckige Bauräume zum Aufnehmen der Filteraufnahme genutzt werden. Insbesondere wird die Filteraufnahme so angeordnet, dass eine Breitenrichtung des Aufnahmeabschnitts horizontal positioniert ist. Vorzugsweise weist der Aufnahmeabschnitt ein erstes und ein zweites Gehäuseteil auf, die mit Hilfe von Befestigungsmitteln miteinander verbunden sein können. Die Gehäuseteile können aus einem Kunststoffmaterial oder einem metallischen Werkstoff gefertigt sein. Vorzugsweise sind die Gehäuseteile Kunststoffspritzgussbauteile. Der Aufnahmeabschnitt kann auch einteilig ausgebildet sein. Das heißt, die Gehäuseteile bilden ein Bauteil. Vorzugsweise ist der Wartungsdeckel von dem Aufnahmeabschnitt abnehmbar.

Bei Ausführungsformen weist die Filteraufnahme eine Vielzahl an Fluideinlässen auf. Jeder Fluideinlass weist zumindest ein Leitelement auf. Die Leitelemente sind vorzugsweise als Leitschaufeln ausgebildet.

Bei weiteren Ausführungsformen sind die Fluideinlässe gleichmäßig über einen Umfang der Filteraufnahme verteilt angeordnet. Vorzugsweise sind die Fluideinlässe gleichmäßig voneinander beabstandet angeordnet. Alternativ können die Fluideinlässe ungleichmäßig verteilt angeordnet sein.

Bei weiteren Ausführungsformen verändert sich ein jeweiliger Krümmungswinkel der Leitelemente über einen Umfang der Filteraufnahme. Jedes Leitelement weist vorzugsweise einen ersten parallel zu der Einströmrichtung orientierten Abschnitt und einen zweiten schräg zu der Einströmrichtung orientierten Abschnitt auf. Die Abschnitte sind relativ zueinander in dem Krümmungswinkel geneigt angeordnet. Die Krümmungswinkel aller Leitelemente können gleich sein. Alternativ können die Leitelemente unterschiedliche Krümmungswinkel aufweisen. Beispielsweise können die Krümmungswinkel über den Umfang der Filteraufnahme variieren.

Bei weiteren Ausführungsformen verändert sich ein jeweiliger Einströmquerschnitt der Fluideinlässe über einen Umfang der Filteraufnahme. Der Einströmquerschnitt kann beispielsweise rechteckig oder rund sein. Durch die Variation der Einströmquerschnitte kann der Vorabscheidegrad optimiert werden.

Bei weiteren Ausführungsformen ist der Fluideinlass an einem von der Filteraufnahme abnehmbaren Wartungsdeckel angeordnet. Vorzugsweise ist der Fluideinlass eine Öffnung in dem Wartungsdeckel. Der Wartungsdeckel weist vorzugsweise auch die Leitelemente auf. Die Leitelemente sind insbesondere materialeinstückig mit dem Wartungsdeckel ausgebildet. Der Wartungsdeckel kann mit Hilfe von Schnellverschlüssen an der Filteraufnahme befestigt sein.

Bei weiteren Ausführungsformen ist das Leitelement derart positioniert, dass es in Längsrichtung des Filterelements neben diesem angeordnet ist. Vorzugsweise ist eine Vielzahl Leitelemente um das Filterelement herum angeordnet. Hierdurch kann der für die Filteraufnahme zur Verfügung stehende Bauraum von dem Filterelement optimal ausgenutzt werden. Die Länge des Filterelements kann dadurch annähernd der Länge der Filteraufnahme entsprechen.

Bei weiteren Ausführungsformen weist die Filteraufnahme einen rohrförmigen Anströmschutz auf, in dem das Filterelement zumindest teilweise anordenbar ist. Der Anströmschutz oder die Anströmzarge ist vorzugsweise fluiddicht.

Bei weiteren Ausführungsformen ist der Anströmschutz materialeinstückig mit einem Wartungsdeckel der Filteraufnahme und/oder der Filteraufnahme ausgebildet. Der Wartungsdeckel ist vorzugsweise ein kostengünstiges Kunststoffspritzgussbauteil. Der Wartungsdeckel kann auch aus Blech gefertigt sein.

Weiterhin wird eine Filteranordnung mit einer derartigen Filteraufnahme und einem Filterelement, das in einem Aufnahmeabschnitt der Filteraufnahme aufgenommen ist, vorgeschlagen.

Weiterhin wird eine Filteraufnahme für ein insbesondere erfindungsgemäßes Filterelement, das quer zu einer Längsrichtung desselben einen ovalen Querschnitt aufweist, vorgeschlagen. Die Filteraufnahme umfasst einen Aufnahmeabschnitt zum Aufnehmen des Filterelements, einen Fluideinlass zum Einlass von zu filterndem Fluid in die Filteraufnahme und einen Fluidauslass zum Auslass des mit Hilfe des Filterelements gefilterten Fluids aus der Filteraufnahme, wobei der Fluidauslass so angeordnet ist, dass eine Ausströmrichtung des gefilterten Fluids aus dem Fluidauslass parallel zu der Längsrichtung des Filterelements orientiert ist und wobei der Fluidauslass dem Filterelement abgewandt einen kreisrunden Querschnitt und dem Filterelement zugewandt einen ovalen Querschnitt aufweist.

Hierdurch wird ein Druckverlust beim Ausströmen des gefilterten Fluids vermindert. Dies erhöht die Effizienz einer Filteranordnung mit einer derartigen Filteraufnahme. Vorzugsweise weist der ovale Querschnitt eine geringere Höhe auf als der Durchmesser des kreisrunden Querschnitts.

Bei Ausführungsformen weisen der kreisrunde Querschnitt und der ovale Querschnitt des Fluidauslasses eine gleiche Querschnittsfläche auf. Hierdurch kann das gefilterte Fluid ungehindert abströmen. Der ovale Querschnitt kann auch eine größere Querschnittsfläche als der kreisrunde Querschnitt aufweisen.

Bei weiteren Ausführungsformen weist der Fluidauslass einen geschwungenen Übergangsabschnitt auf, der den kreisrunden Querschnitt des Fluidauslasses mit dem ovalen Querschnitt des Fluidauslasses verbindet. Der Übergangsquerschnitt ist vorzugsweise S-förmig geschwungen.

Bei weiteren Ausführungsformen weitet sich der Fluideinlass in einer Breitenrichtung des Filterelements von dem kreisrunden Querschnitt auf den ovalen Querschnitt auf. Vorzugsweise ist eine Breite des ovalen Querschnitts größer als ein Durchmesser des kreisrunden Querschnitts.

Bei weiteren Ausführungsformen schnürt sich der Fluideinlass in einer Höhenrichtung des Filterelements von dem kreisrunden Querschnitt auf den ovalen Querschnitt. Vorzugsweise ist eine Höhe des ovalen Querschnitts kleiner als ein Durchmesser des kreisrunden Querschnitts.

Bei weiteren Ausführungsformen weist die Filteraufnahme einen rohrförmigen Anströmschutz auf, in dem das Filterelement zumindest teilweise aufnehmbar ist. Der Anströmschutz oder die Anströmzarge ist vorzugsweise fluiddicht.

Bei weiteren Ausführungsformen ist der Anströmschutz einstückig mit einem von der Filteraufnahme abnehmbaren Wartungsdeckel ausgebildet ist. Der Wartungsdeckel ist vorzugsweise ein kostengünstiges Kunststoffspritzgussbauteil. Alternativ kann der Wartungsdeckel beispielsweise aus Blech, insbesondere aus Stahlblech, gefertigt sein.

Weiterhin wird ein Filterelement, das quer zu einer Längsrichtung desselben einen ovalen Querschnitt aufweist, vorgeschlagen. Das Filterelement umfasst eine erste Endscheibe, eine zweite Endscheibe und einen zwischen der ersten Endscheibe und der zweiten Endscheibe angeordneten Filterkörper, wobei ein Querschnitt des Filterkörpers an der zweiten Endscheibe größer als ein Querschnitt des Filtermediums an der ersten Endscheibe ist. Das Filterelement kann eines oder mehrere der weiter oben oder unten oder in den Ansprüchen beschriebenen Merkmale aufweisen.

Vorzugsweise läuft der Filterkörper innenseitig konisch zu. Dies ermöglicht im Vergleich zu einem nicht konisch zulaufenden Filterkörper eine vergrößerte Fluidaustrittsöffnung des Filterelements. Hierdurch kann der Übergangsabschnitt des Fluidauslasses optimiert werden, da die Höhe des ovalen Querschnitts des Fluidauslasses an den Durchmesser des kreisrunden Querschnitts des Fluidauslasses angenähert werden kann. Dies führt zu einem nochmals redzierten Druckverlust. Das Filterelement ist vorzugsweise ein Luftfilterelement zum Filtern von Ansaugluft für eine Brennkraftmaschine. Vorzugsweise findet das Filterelement in Kraftfahrzeugen, Lastkraftwagen, Baufahrzeugen, Wasserfahrzeugen, Schienenfahrzeugen, landwirtschaftlichen Maschinen bzw. Fahrzeugen oder Luftfahrzeugen Anwendung.

Bei Ausführungsformen vergrößert sich der Querschnitt des Filterkörpers von der ersten Endscheibe in Richtung der zweiten Endscheibe kontinuierlich. Das Filterelement kann ein Sekundärelement umgeben, das in der Filteraufnahme aufnehmbar ist. Das Sekundärelement kann korrespondierend zu dem Filterkörper des ersten Filterelements eine konische oder kegelstumpfförmige Geometrie aufweisen.

Weiterhin wird eine Filteranordnung mit einer derartigen Filteraufnahme und einem derartigen Filterelement und/oder Sekundärelement vorgeschlagen, das in einem Aufnahmeabschnitt der Filteraufnahme aufgenommen ist.

Weitere mögliche Implementierungen der Erfindung umfassen auch nicht explizit genannte Kombinationen von zuvor oder im Folgenden bezüglich der Ausführungsbeispiele beschriebenen Merkmale oder Verfahrensschritte. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
- Fig. 1:: eine schematische perspektivische Ansicht einer Ausführungsform einer Filteranordnung;
- Fig. 2:: eine schematische Ansicht der Filteranordnung gemäß Fig. 1;
- Fig. 3:: eine schematische Ansicht der Filteranordnung gemäß Fig. 1;
- Fig. 4:: eine schematische Teilschnittansicht der Filteranordnung gemäß Fig. 1;
- Fig. 5:: eine schematische Teilschnittansicht der Filteranordnung gemäß Fig. 1;
- Fig. 6:: eine schematische perspektivische Ansicht einer Ausführungsform eines Filterelements;
- Fig. 7:: eine schematische perspektivische Ansicht einer Ausführungsform eines Sekundär-elements;
- Fig. 8:: eine schematische Ansicht der Filteranordnung gemäß Fig. 1;
- Fig. 9:: eine schematische Schnittansicht der Filteranordnung gemäß der Schnittlinie IX-IX der Fig. 8;
- Fig. 10:: eine schematische Schnittansicht der Filteranordnung gemäß der Schnittlinie X-X der Fig. 8;
- Fig. 11:: eine schematische Teilschnittansicht der Filteranordnung gemäß Fig. 1;
- Fig. 12:: eine schematische perspektivische Ansicht einer weiteren Ausführungsform einer Filter-anordnung;
- Fig. 13:: eine schematische perspektivische Ansicht einer weiteren Ausführungsform einer Filter-anordnung;
- Fig. 14:: eine schematische perspektivische Ansicht einer weiteren Ausführungsform eines Filter-elements;
- Fig. 15:: eine schematische Schnittansicht des Filterelements gemäß Fig. 14;
- Fig. 16:: eine schematische Ansicht des Filterelements gemäß Fig. 14;
- Fig. 17:: eine schematische Teilschnittansicht des Filterelements gemäß Fig. 14;
- Fig. 18:: eine schematische Teilschnittansicht einer weiteren Ausführungsform eines Filter-elements;
- Fig. 19:: eine schematische Teilschnittansicht einer weiteren Ausführungsform einer Filteranordnung;
- Fig. 20:: eine schematische perspektivische Ansicht einer weiteren Ausführungsform einer Filter-anordnung;
- Fig. 21:: eine schematische perspektivische Teilschnittansicht der Filteranordnung gemäß Fig. 20;
- Fig. 22:: eine schematische Teilschnittansicht der Filteranordnung gemäß Fig. 20;
- Fig. 23:: eine schematische Schnittansicht der Filteranordnung gemäß Fig. 20;
- Fig. 24:: eine schematische Teilschnittansicht der Filteranordnung gemäß Fig. 20;
- Fig. 25:: eine schematische Ansicht der Filteranordnung gemäß Fig. 20;
- Fig. 26:: eine schematische perspektivische Ansicht einer weiteren Ausführungsform einer Filteranordnung;
- Fig. 27:: eine schematische Ansicht der Filteranordnung gemäß Fig. 26;
- Fig. 28:: eine schematische Schnittansicht der Filteranordnung gemäß Fig. 26;
- Fig. 29:: eine schematische Schnittansicht der Filteranordnung gemäß Fig. 26;
- Fig. 30:: eine schematische Schnittansicht der Filteranordnung gemäß Fig. 26
- Fig. 31:: eine schematische Schnittansicht der Filteranordnung gemäß Fig. 26; und
- Fig. 32:: eine schematische Teilschnittansicht der Ausführungsform einer Filteranordnung gemäß Fig. 19 ohne Abbildung des Filterelements.

In den Figuren sind gleiche oder funktionsgleiche Elemente, sofern nichts anderes angegeben ist, mit denselben Bezugszeichen versehen worden.

### Ausführungsform(en) der Erfindung

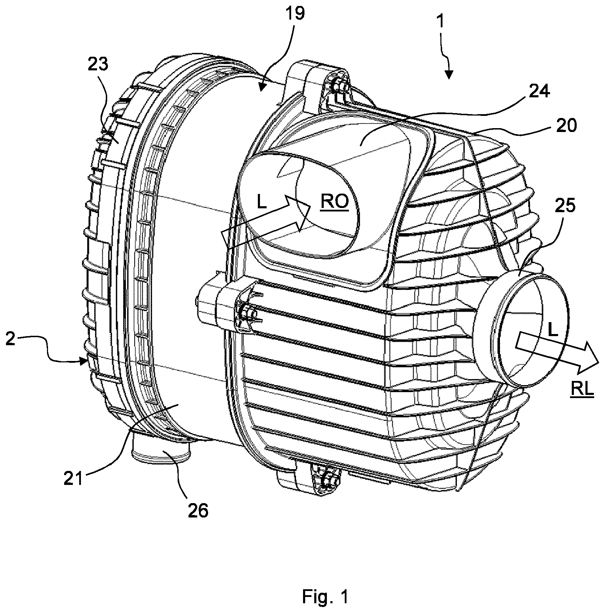

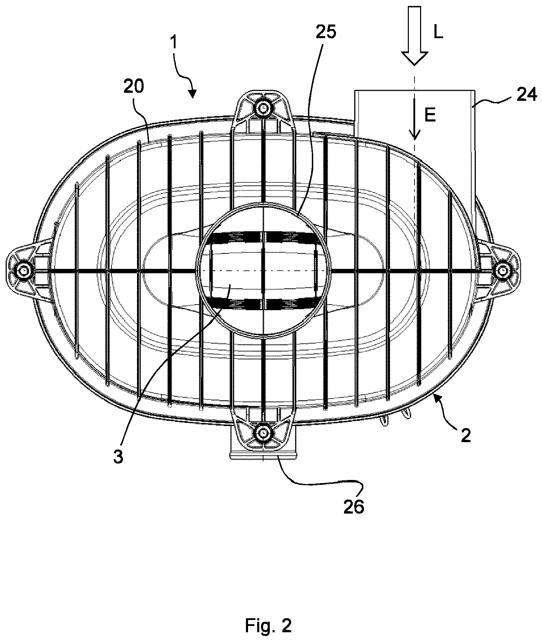

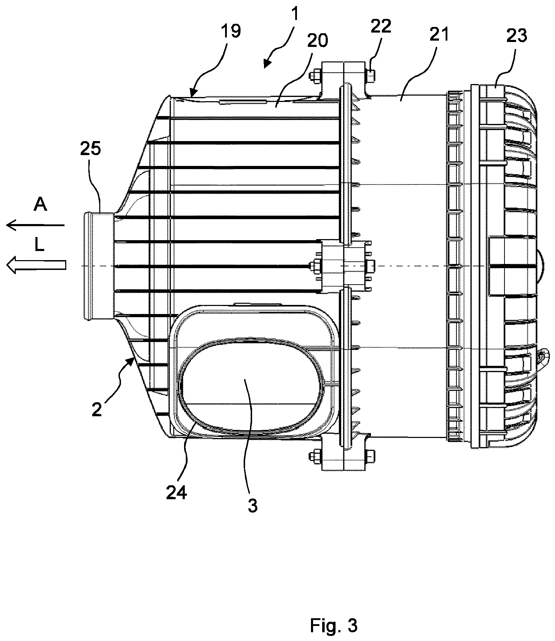

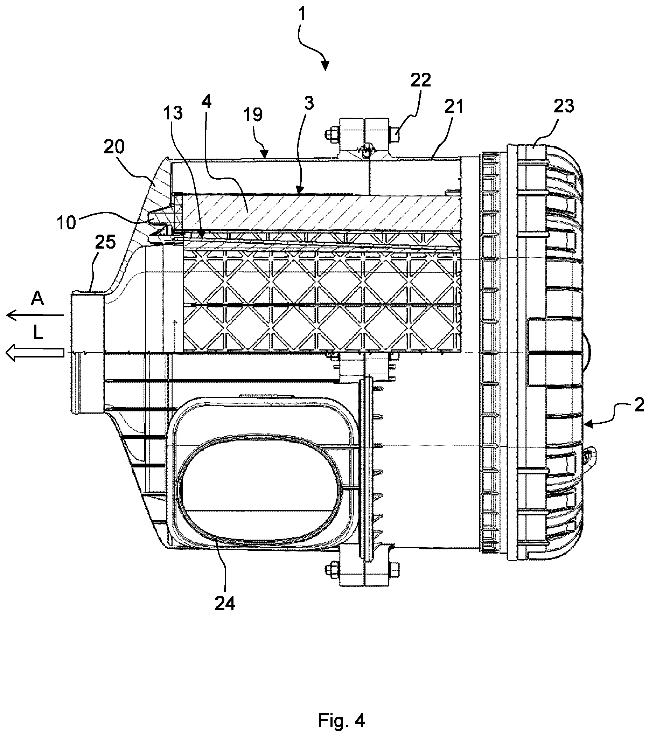

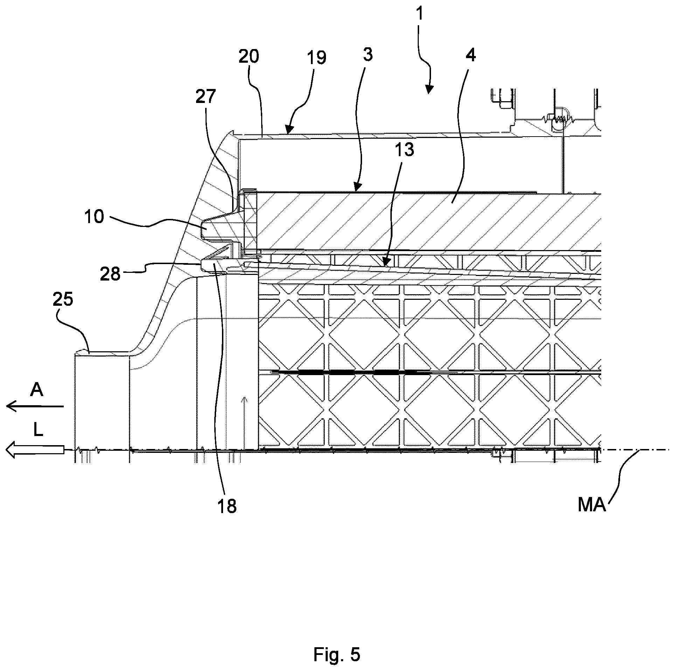

Die Fig. 1 zeigt eine schematische perspektivische Ansicht einer Ausführungsform einer Filteranordnung 1. Die Fig. 2 zeigt eine Vorderansicht der Filteranordnung 1. Die Fig. 3 zeigt eine Seitenansicht der Filteranordnung 1. Die Fig. 4 und 5 zeigen jeweils Teilschnittansichten der Filteranordnung 1.

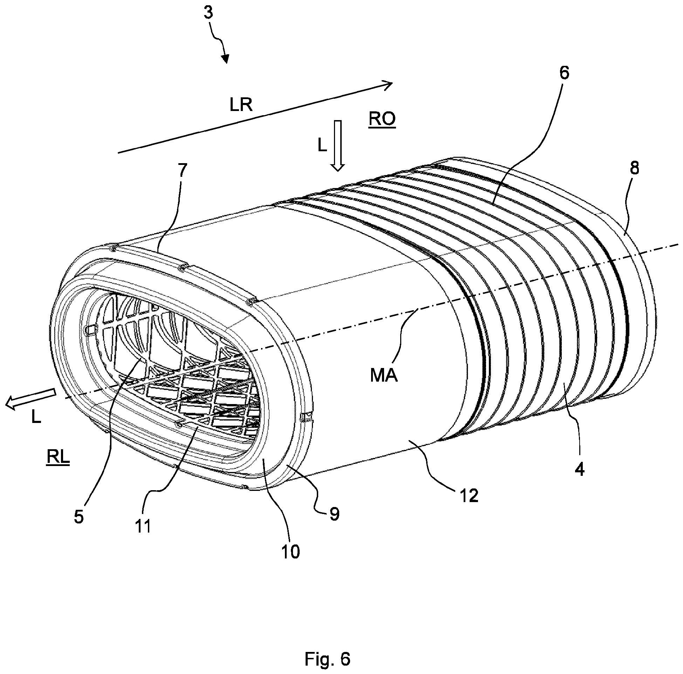

Die Filteranordnung 1 umfasst eine Filteraufnahme 2 und ein in der Filteraufnahme 2 angeordnetes Filterelement 3. Die Filteraufnahme 2 kann auch als Gehäuse oder Filtergehäuse bezeichnet werden. Das Filterelement 3 ist in der Fig. 6 gezeigt. Die Filteranordnung 1 findet vorzugsweise als Ansaugluftfilter für Brennkraftmaschinen, beispielsweise in Kraftfahrzeugen, Lastkraftwagen, Baufahrzeugen, Wasserfahrzeugen, Schienenfahrzeugen, landwirtschaftlichen Maschinen bzw. Fahrzeugen oder Luftfahrzeugen Anwendung. Das Filterelement 3 ist insbesondere dazu geeignet, Verbrennungsluft einer Brennkraftmaschine zu filtern. Vorzugsweise ist das Filterelement 3 ein Luftfilterelement.

Das Filterelement 3, das auch als Primärelement oder Hauptelement bezeichnet werden kann, umfasst einen Filterkörper 4, der ein Mittelrohr 5 umgibt und bevorzugt an diesem derart anliegt, dass das Mittelrohr 5 eine Stützfunktion für den Filterkörper bei Durchströmung wahrnehmen kann. Beispielsweise kann der Filterkörper 4 als Wickel aus einem Filtermedium auf das Mittelrohr 5 aufgewickelt sein oder an diesem ringförmig geschlossen, beispielsweise in Form eines sternförmig gefalteten Balges, anliegen. Das Mittelrohr 5 ist vorzugsweise gitterförmig und damit fluiddurchlässig. Der Filterkörper 4 ist vorzugsweise gefaltet. Das gefaltete Filtermedium kann zur Stabilisierung mit einem Fadenwickel 6, d.h. einem in Schmelzklebstoff oder anderem Klebstoff getränktem Band oder Faden umwickelt oder mittels kreis- oder spiralförmig umlaufender Klebstoffraupen fixiert sein. Das Filtermedium ist beispielsweise ein Filterpapier, ein Filtergewebe, ein Filtergelege oder ein Filtervlies. Insbesondere kann das Filtermedium in einem Spinnvlies- oder Meltblown-Verfahren hergestellt sein oder eine derartige, auf einem Vlies- oder Celluloseträger aufgebrachte Faserlage umfassen. Weiter kann das Filtermedium verfilzt oder vernadelt sein. Das Filtermedium kann Naturfasern, wie Cellulose oder Baumwolle, oder Kunstfasern, beispielsweise aus Polyester, Polyvinylsulfit oder Polytetrafluorethylen, aufweisen. Die Fasern können bei der Verarbeitung in, schräg und/oder quer oder ungeordnet zur Maschinenrichtung orientiert sein.

Das Filterelement 3 weist eine erste, insbesondere offene Endscheibe 7 und eine zweite, insbesondere geschlossene Endscheibe 8 auf. Die Endscheiben 7, 8 sind vorzugsweise aus einem Kunststoffmaterial gefertig. Beispielsweise können die Endscheiben 7, 8 als kostengünstige Kunststoffspritzgussbauteile ausgebildet sein. Die Endscheiben 7, 8 können beispielsweise aus einem insbesondere in Gießschalen gegossenen, bevorzugt geschäumten Polyurethanmaterial gefertigt sein. Die Endscheiben 7, 8 können an den Filterkörper 4 angegossen sein. Der Filterkörper 4 ist zwischen den Endscheiben 7, 8 angeordnet. Auf einer dem Filterkörper 4 abgewandten Vorderseite 9 der ersten Endscheibe 7 ist eine Dichteinrichtung 10 zum Abdichten des Filterelements 3 gegenüber der Filteraufnahme 2 vorgesehen. Die Dichteinrichtung 10 ist dazu eingerichtet, das Filterelement 3, insbesondere radial, gegenüber der Filteraufnahme 2 abzudichten.

Das Filtermedium des Filterkörpers 4 kann mit den Endscheiben 7, 8 verschmolzen, verklebt oder verschweißt sein. Die zweite Endscheibe 8 ist beispielsweise plattenförmig und bevorzugt fluidundurchlässig. In der ersten Endscheibe 7 ist eine Aufnahmeöffnung 11 vorgesehen, durch welche weiterhin die durch das Filterelement 3 gefilterte Luft austreten kann. Weiterhin weist das Filterelement 3 bevorzugt einen Anströmschutz 12 auf, der ein direktes Anströmen des Filtermediums 4 mit partikelbeladenem Fluid L verhindert. Das Fluid L kann Luft sein. Der Anströmschutz 12 kann eine Folie oder ein engmaschiges Netz oder Gitter sein. Der Anströmschutz 12 kann fluidundurchlässig oder fluiddurchlässig sein. Der Anströmschutz 12 kann mit dem Filterkörper 4 verklebt, verschweißt oder verschmolzen sein. Der Anströmschutz 12 ist benachbart zu der ersten Endscheibe 7 angeordnet. Insbesondere grenzt der Anströmschutz 12 an die erste Endscheibe 7 an. Der Anströmschutz 12 kann mit der ersten Endscheibe 7 insbesondere strömungsdicht verbunden sein. Zu reinigendes Fluid L tritt von einer Rohseite RO des Filterelements 3 durch den Filterkörper 4 hindurch in einen von dem Mittelrohr 5 umgebenen Hohlraum und strömt aus diesem durch die Aufnahmeöffnung 11 als gefiltertes Fluid L auf eine insbesondere vom Filterkörper 4 umgebene Reinseite RL des Filterelements 3.

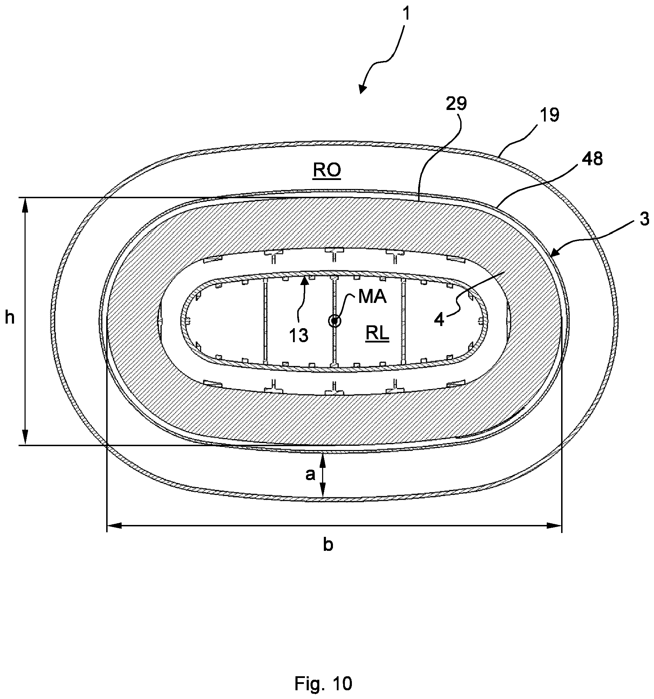

Das Filterelement 3 weist in einer Längsrichtung LR desselben bevorzugt einen ovalen Querschnitt auf. Der Querschnitt kann sich ausgehend von der ersten Endscheibe 7 in Richtung der zweiten Endscheibe 8 verringern, so dass das Filterelement 3 konisch zuläuft. Bevorzugt jedoch weist das Filterelement 3, wie in der Fig. 6 gezeigt, einen ovalen Querschnitt auf. Das heißt, das Filterelement 3 ist zylinderförmig mit einer ovalen Basisfläche. Unter oval kann vorliegend verstanden werden eine Form mit nicht konkaver, glatter Außenkontur, d.h. durchgehend aus konvexen und geraden Abschnitten, bevorzugt ausschließlich aus konvexen Abschnitten gebildet, beispielsweise ein rechteckiger Querschnitt mit verrundeten Ecken, ein elliptischer Querschnitt oder ein aus mehreren Kreisbögen gebildeter Querschnitt. Bevorzugt wird eine ovale Außenkontur oder ein Querschnitt verwendet, die einen Mittelpunkt und zwei sich in diesem schneidende Symmetrieachsen aufweisen. Das Filterelement 3 und insbesondere der Filterkörper 4 weisen eine Breite b und eine Höhe h (Fig. 10) auf. Die Breite b ist größer als die Höhe h. Bevorzugt beträgt die Breite b das zwei- bis dreifache der Höhe h, weiter bevorzugt beträgt die Breite b das 1,5- bis dreifache der Höhe h.

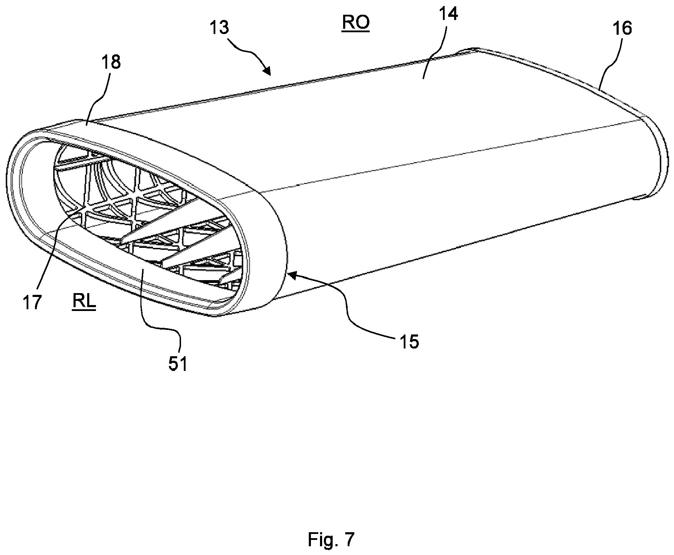

In der Filteraufnahme 2, umgeben von dem Filterelement 3, kann ein in der Fig. 7 gezeigtes Sekundärelement 13 aufgenommen sein. Derartige Sekundärelemente dienen insbesondere als Sicherheit für die Fälle, in denen ein Bediener bei laufender Maschine die Filteraufnahme 2 öffnet und das Filterelement 3 entnimmt, beispielsweise zum Entstauben oder Wechseln. Insbesondere kann das Filterelement 3 als erstes Filterelement und das Sekundärelement 13 als zweites Filterelement bezeichnet werden. Vorzugsweise ist das Sekundärelement 13 in der Aufnahmeöffnung 11 aufgenommen. Das Sekundärelement 13 weist ein Filtermedium 14 sowie eine erste Endscheibe 15 und eine zweite Endscheibe 16 auf. Das Filtermedium 14 ist zwischen den Endscheiben 15, 16 angeordnet. Das Filtermedium 14 umgibt ein gitterförmiges Mittelrohr 17. Das Sekundärelement 13 weist wie das Filterelement 3 eine Rohseite RO und eine Reinseite RL auf. Die erste Endscheibe 15 kann eine Dichteinrichtung 18 zum Abdichten des Sekundärelements 13 gegenüber der Filteraufnahme 2 aufweisen. Die Dichteinrichtung 18 kann materialeinstückig mit der ersten Endscheibe 15 ausgebildet sein. Das Filterelement 3 und das Sekundärelement 13 sind in der Filteraufnahme 2 aufnehmbar. Das Sekundärelement 13 weist eine Fluidausströmöffnung 51 auf. Die Fluidausströmöffnung 51 kann als Fluidausströmöffnung des Filterelements 3 bezeichnet werden.

Wie die Fig. 1 bis 5 zeigen, umfasst die Filteraufnahme 2 einen Aufnahmeabschnitt 19. Der Aufnahmeabschnitt 19 kann aus einem ersten Gehäuseteil 20 und aus einem zweiten Gehäuseteil 21 gebildet sein. Die Gehäuseteile 20, 21 können mit Befestigungsmitteln 22, wie beispielsweise Schrauben, miteinander verbunden sein. Die Gehäuseteile 20, 21 sind vorzugsweise aus einem Kunststoffmaterial gefertigt. Alternativ können die Gehäuseteile 20, 21 aus Blech, insbesondere aus Stahlblech, gefertigt sein. Beispielsweise können die Gehäuseteile 20, 21 als kostengünstige Spritzgussbauteile ausgebildet sein. Zwischen den Gehäuseteilen 20, 21 kann eine Dichteinrichtung wie beispielsweise ein O-Ring vorgesehen sein. Alternativ kann der Aufnahmeabschnitt 19 einteilig ausgebildet sein. Das heißt, die Gehäuseteile 20, 21 bilden ein einstückiges Bauteil.

Weiterhin weist die Filteraufnahme 2 einen von dem Aufnahmeabschnitt 19 abnehmbaren Wartungsdeckel 23 auf. Über den Wartungsdeckel 23 kann das Filterelement 3 aus dem Aufnahmeabschnitt 19 entnommen werden. Der Wartungsdeckel 23 kann mit Hilfe von Schnellverschlüssen mit dem Aufnahmeabschnitt 19 verbunden sein. Zwischen dem Wartungsdeckel 23 und dem Aufnahmeabschnitt 19 kann eine Dichteinrichtung vorgesehen sein. Die Fig. 2 und 3 zeigen die Filteranordnung 1 in zwei unterschiedlichen Einbausituationen, nämlich in einer liegenden und einer stehenden.

Die Filteraufnahme 2 bzw. der Aufnahmeabschnitt 19 weist einen Fluideinlass 24 zum Einlass des zu filternden Fluids L in die Filteraufnahme 2 und einen insbesondere zentralen Fluidauslass 25 zum Auslass des mit Hilfe des Filterelements 3 gefilterten Fluids L aus der Filteraufnahme 2 auf. Der Fluideinlass 24 und der Fluidauslass 25 sind vorzugsweise rohrförmig ausgebildet. Der Fluideinlass 24 kann, wie in den Fig. 1, 3 und 4 gezeigt, einen ovalen Querschnitt aufweisen. Mit Hilfe des ovalen Querschnitts, dessen breitere Ausdehung bevorzugt in Richtung der Längsrichtung LR orientiert ist, kann im Vergleich zu einem kreisrunden Querschnitt ein geringerer Anfangsdruckverlust erreicht werden. Das zu filternde Fluid L tritt in einer Einströmrichtung E in den Fluideinlass 24 ein. Der Fluidauslass 25 weist vorzugsweise einen kreisrunden Querschnitt auf. Das Fluid L tritt in einer Ausströmrichtung A vorzugsweise parallel zur Längsrichtung LR des Filterelements 3 aus dem Fluidauslass 25 aus. Die Einströmrichtung E ist senkrecht zur Ausströmrichtung A orientiert.

An dem Wartungsdeckel 23 kann eine Partikelaustragsöffnung 26 vorgesehen sein. Die Partikelaustragsöffnung 26 ist vorzugsweise rohrförmig. Über die Partikelaustragsöffnung 26 können aus dem Fluid L vorabgeschiedene Partikel aus der Filteraufnahme 2 abgeführt werden. Die Partikelaustragsöffnung 26 kann ein Ventil aufweisen. Die Gehäuseteile 20, 21 und/oder der Wartungsdeckel 23 können mit Rippen verstärkt sein.

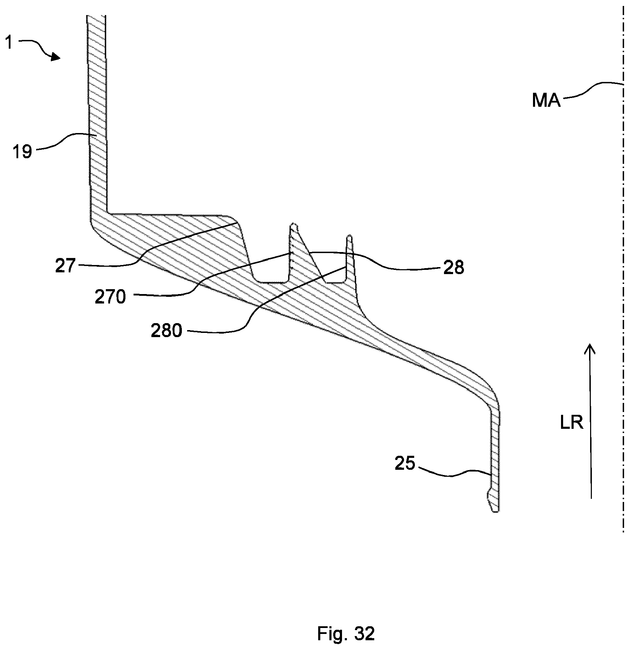

In der Filteraufnahme 2 und insbesondere in dem Aufnahmeabschnitt 19 ist ein erster Eingriffsbereich 27 (Fig. 5) vorgesehen, in den die Dichteinrichtung 10 des Filterelements 3 eingreift. Dieser Eingriffsbereich 27 weist bevorzugt eine Dichtungsanlagefläche auf, an welcher die Dichteinrichtung 10 dichtend zur Anlage kommen kann. Im vorliegenden Ausführungsbeispiel ist wie bevorzugt gezeigt eine ovalzylinderförmige, radial nach außen gerichtete Dichtungsanlagefläche vorgesehen, die dem Verlauf der Innenfläche 43 (Dichtfläche) der Dichteinrichtung 10 folgt. Weiterhin kann an dem Aufnahmeabschnitt 19 ein zweiter Eingriffsbereich 28 vorgesehen sein, in den die Dichteinrichtung 18 des Sekundärelements 13 eingreift. Dieser zweite Eingriffsbereich 28 weist bevorzugt ebenfalls eine Dichtungsanlagefläche 280 (siehe Fig. 32) auf, an welcher die Dichteinrichtung 18 dichtend zur Anlage kommen kann. Im vorliegenden Ausführungsbeispiel ist wie bevorzugt gezeigt eine ovalzylinderförmige, radial nach außen gerichtete Dichtungsanlagefläche 280 vorgesehen. Das erste Gehäuseteil 20 kann die Eingriffsbereiche 27, 28 aufweisen. Die Eingriffsbereiche 27, 28 können den Fluidauslass 25 vollständig umlaufen.

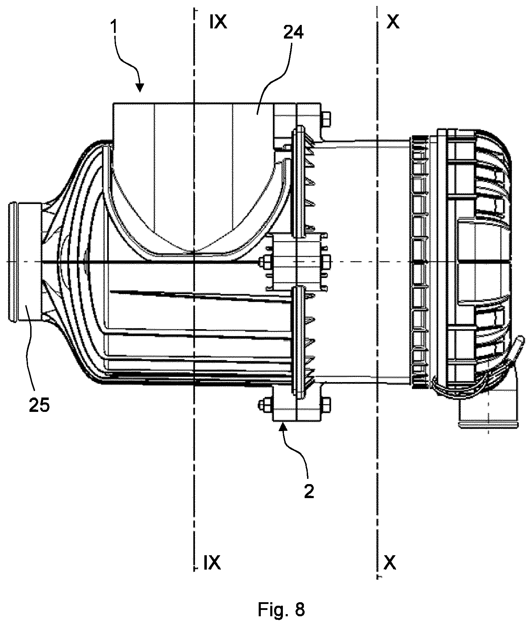

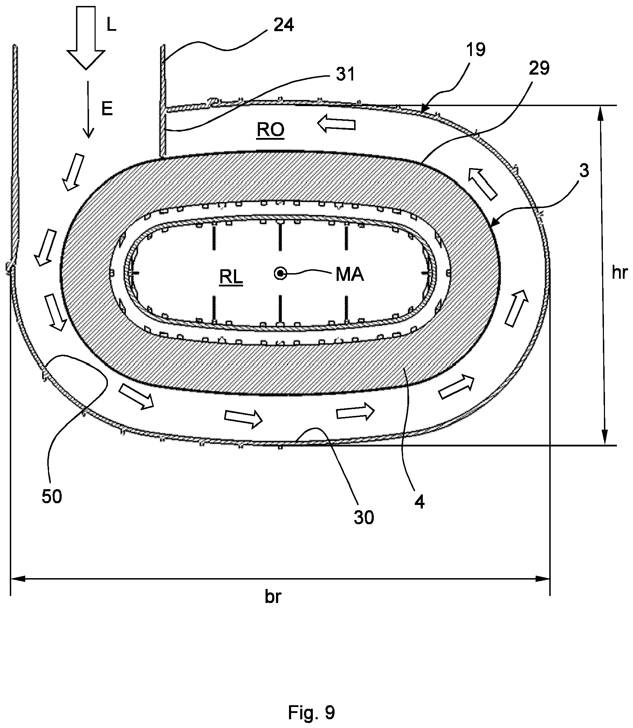

Die Fig. 8 zeigt die Filteranordnung 1 in einer schematischen Seitenansicht. Wie die Fig. 9 in einer schematischen Schnittansicht gemäß der Schnittlinie IX-IX der Fig. 8 zeigt, ist der Fluideinlass 24 so angeordnet, dass die Einströmrichtung E des Fluids L in Richtung einer Mantelfläche 29 und senkrecht zu der Längsrichtung LR des in dem Aufnahmeabschnitt 19 angeordneten Filterelements 3 orientiert ist. Die Mantelfläche 29 bildet eine Umhüllende des Filterkörpers 4. Eine zylindrische, insbesondere ovalzylindrische, Geometrie des Filterelements 3 wird gebildet durch die Endscheiben 7, 8 und die Mantelfläche 29. Das zu filternde Fluid L umströmt das in dem Aufnahmeabschnitt 19 aufnehmbare Filterelement 3 so, dass an einer Wandung 30 der Filteraufnahme 2 bzw. des Aufnahmeabschnitts 19 in dem zu filternden Fluid L enthaltene Partikel mit Hilfe der Fliehkraft abgeschieden werden. Der Aufnahmeabschnitt 19 wirkt so als Fliehkraftabscheider. Insbesondere ist die Einströmrichtung E so orientiert, dass das zu filternde Fluid L das Filterelement 3 im Wesentlichen tangential anströmt. Der Aufnahmeabschnitt 19 weist im Querschnitt vorzugsweise eine Breitenrichtung br und eine Höhenrichtung hr auf. Das Breiten- zu Höhenverhältnis br/hr beträgt bevorzugt mindestens 4:3, weiter bevorzugt mindestens 3:2, insbesondere mindestens 2:1 und/oder höchstens 6:1, bevorzugt höchstens 4:1, besonders bevorzugt höchstens 3:1 oder 2:1. Für die Zwecke einer optimierten Vorabscheidung sind Verhältnisse kleiner 3:1 und bevorzugt kleiner 2:1 oder gar kleiner 1,5:1 vorteilhaft. Vorzugsweise ist der Fluideinlass 24 so angeordnet, dass die Einströmrichtung E senkrecht zu der Breitenrichtung br, d.h. bevorzugt senkrecht zur Richtung der breiteren Ausdehnung, orientiert ist.

Dadurch, dass der Fluideinlass 24 so orientiert ist, dass das einströmende Fluid L auf eine vergleichsweise stärker gekrümmte Krümmung 50 der Wandung 30 des Aufnahmeabschnitts 19 trifft, wird das zu filternde Fluid L stark beschleunigt und umströmt das Filterelement 3 anschließend tangential und insbesondere schraubenförmig, spiralförmig oder helixförmig. Hierdurch wird eine gute Partikelabscheidung aus dem Fluid L erreicht. Der Fluideinlass 24 kann mit Hilfe einer Wandung 31 von dem das Filterelement 3 umströmende Fluid L abgeschirmt sein, welche die Ausbildung einer schraubenförmigen Strömung unterstützt. Die abgeschiedenen Partikel werden mit Hilfe der Partikelaustragsöffnung 26 aus dem Aufnahmeabschnitt 19 entfernt. Der Aufnahmeabschnitt 19 verläuft in der Längsrichtung LR des Filterelements 3 parallel zu der Mantelfläche 29 des Filterelements 3, so dass, wie in der Fig. 10 gezeigt, senkrecht zur Längsrichtung LR umlaufend um das Filterelement 3 ein gleichbleibender Abstand a zwischen dem Filterelement 3 und der Wandung 30 vorgesehen ist.

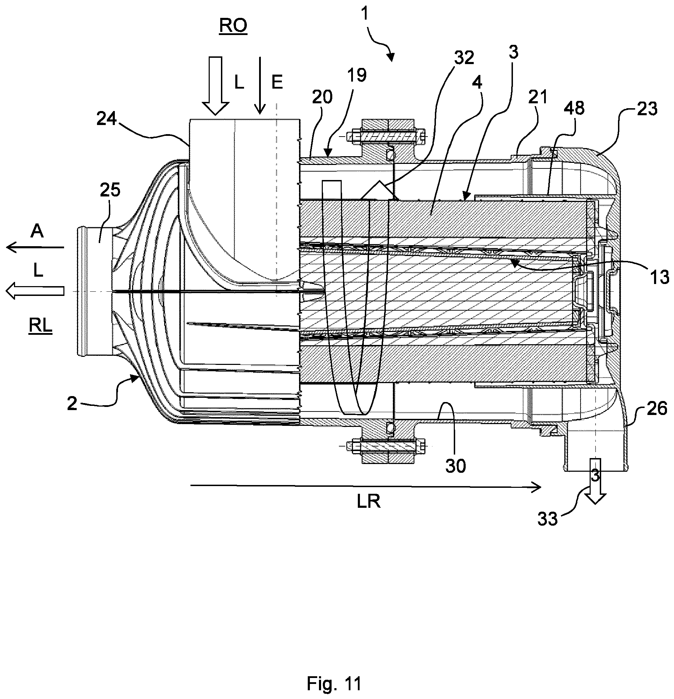

Die Fig. 11 zeigt eine Teilschnittansicht der Filteranordnung 1. Das zu filternde Fluid L strömt durch den Fluideinlass 24 in den Aufnahmeabschnitt 19 hinein. Dadurch, dass die Einströmrichtung E des zu filternden Fluids L in Richtung der Mantelfläche 29 des Filterelements 3 orientiert ist und insbesondere auch senkrecht zu der Längsrichtung LR positioniert ist, umströmt das zu filternde Fluid L, wie in der Fig. 11 mit Hilfe eines Pfeils 32 gezeigt, das Filterelement 3 schraubenfömig und strömt durch den Filterkörper 4 des Filterelements 3 hindurch, um aus dem Fluidauslass 25 der Filteraufnahme 2 in der Auströmrichtung A als gefiltertes Fluid L wieder abzuströmen. Bei dem Umströmen des Filterelements 3 werden aus dem zu filternden Fluid L an der Wandung 30 des Aufnahmeabschnitts 19 mit Hilfe der Fliehkraft Partikel 33 abgeschieden, die über die Partikelaustragsöffnung 26 aus dem Aufnahmeabschnitt 19 entnehmbar sind. Die Partikel 33 können beispielsweise aus der Partikelaustragsöffnung 26 herausfallen oder aus dieser abgesaugt werden. Durch die ovale Querschnittsgeometrie des Aufnahmeabschnitts 19 ergibt sich im Vergleich zu einem kreisrunden Querschnitt eine günstige Partikelabscheidung bei gleichzeitiger Eignung des Systems für Bauräume mit nicht kreisrundem oder quadratischen Querschnitt.

Wie die Fig. 11 weiterhin zeigt, weist der Wartungsdeckel 23 einen rohrförmigen, insbesondere ovalrohrförmigen, Anströmschutz 48 auf, in dem das Filterelement 3 zumindest teilweise aufgenommen ist, bevorzugt derart, dass zwischen Filterelement und Anströmschutz ein Strömungsspalt von einigen Millimetern entsteht. Der Anströmschutz 48 kann materialeinstückig mit dem Wartungsdeckel 23 ausgebildet sein und verhindert insbesondere, dass durch die rotierende Strömung vorabgeschiedene Partikel beispielsweise durch Schwerkrafteffekte doch noch auf dem Filterkörper 4 auftreffen.

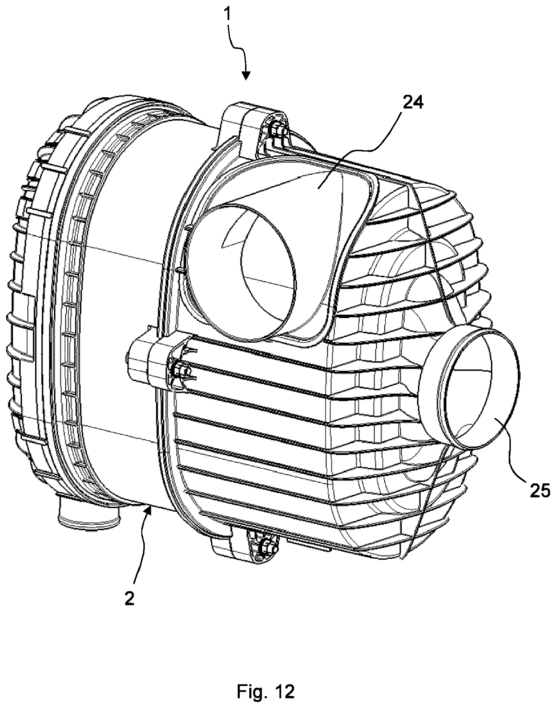

Die Fig. 12 zeigt eine schematische perspektivische Ansicht einer weiteren Ausführungsform einer Filteranordnung 1. Die Ausführungsform der Filteranordnung 1 gemäß der Fig. 12 unterscheidet sich von der Ausführungsform der Filteranordnung gemäß der Fig. 1 lediglich dadurch, dass der Fluideinlass 24 keinen ovalen sondern einen kreisrunden Querschnitt aufweist.

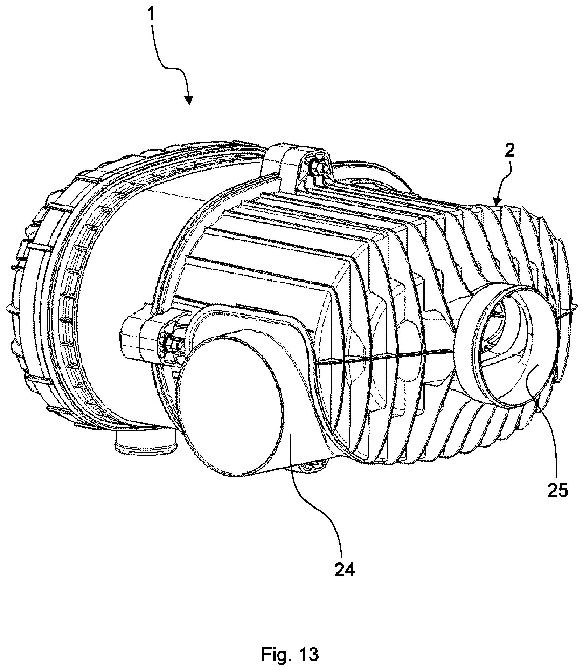

Die Fig. 13 zeigt eine schematische perspektivische Ansicht einer weiteren Ausführungsform einer Filteranordnung 1. Die Ausführungsform der Filteranordnung 1 gemäß der Fig. 13 unterscheidet sich von der Ausführungsform der Filteranordnung 1 gemäß der Fig. 12 dadurch, dass der Fluideinlass 24 so positioniert ist, dass die Einströmrichtung E des zu filternden Fluids L senkrecht zur Höhenrichtung hr des Aufnahmeabschnitts 19, d.h. senkrecht zur Richtung der schmaleren Ausdehnung, und nicht senkrecht zur Breitenrichtung br desselben angeordnet ist.

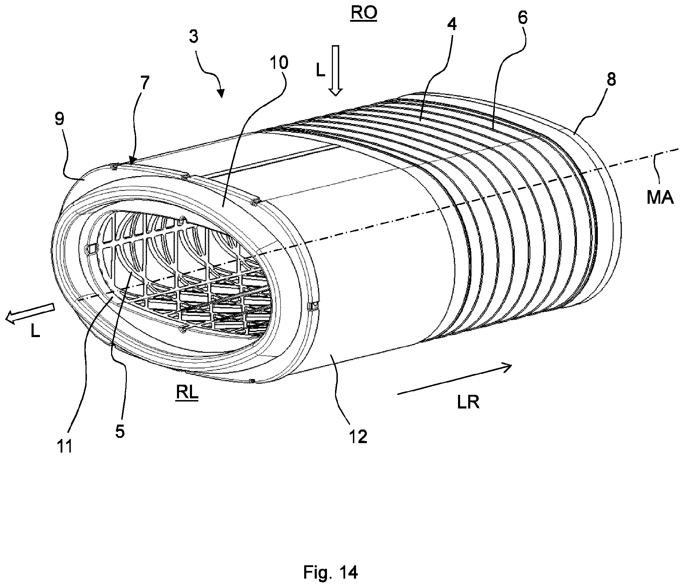

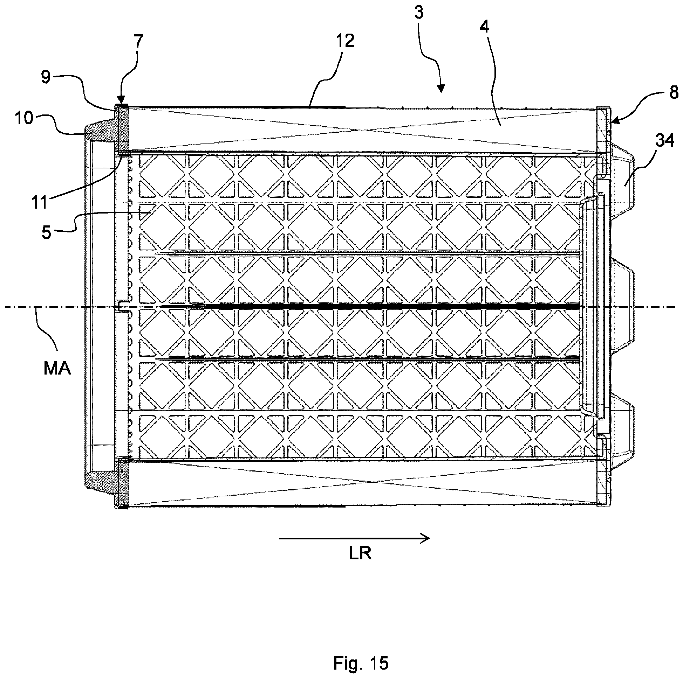

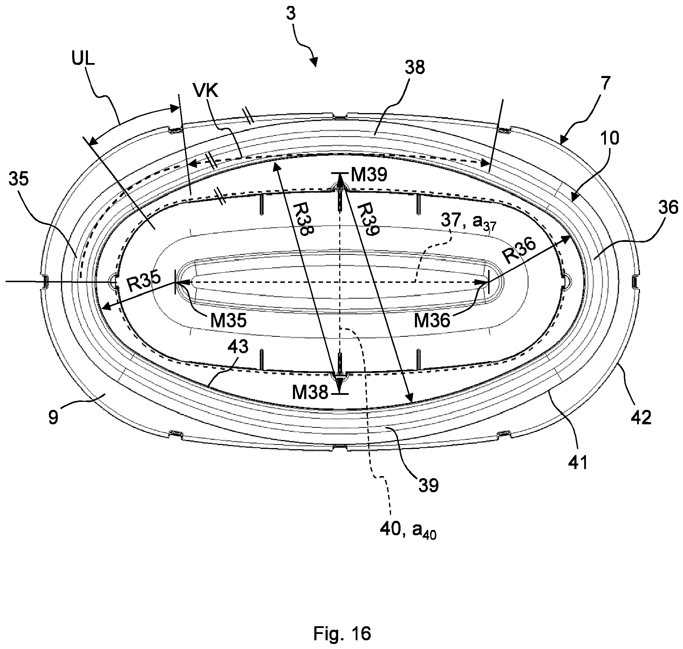

Die Fig. 14 zeigt eine schematische perspektivische Ansicht einer weiteren Ausführungsform eines Filterelements 3. Die Fig. 15 zeigt eine Schnittansicht des Filterelements 3 und die Fig. 16 zeigt eine Vorderansicht des Filterelements 3. Im Folgenden wird auf die Fig. 14 bis 16 gleichzeitig Bezug genommen.

Der Aufbau des Filterelements 3 gemäß der Fig. 14 bis 16 entspricht im Wesentlichen dem Aufbau des Filterelements 3 gemäß der Fig. 6. Das Filterelement 3 weist eine erste Endscheibe 7 und eine zweite Endscheibe 8 auf. Ein gefalteter Filterkörper 4 ist zwischen den Endscheiben 7, 8 positioniert. Die Endscheiben 7, 8 sind vorzugsweise aus gegossenem, insbesondere geschäumtem Polyurethan ausgebildet, welches den Filterkörper dichtend und formschlüssig an dessen axialen Enden umschließt. Die Endscheiben 7, 8 können jedoch auch aus anderen Materialien wie spritzgegossenem thermoplastischem Kunststoff gebildet sein und beispielsweise mit dem Filterkörper 4 verschmolzen, verschweißt oder verklebt sein. Der Filterkörper 4 umgibt ein gitterförmiges Mittelrohr 5 oder einen Wickelkern. Zum Filtern von zu reinigendem Fluid L strömt dieses von einer Rohseite RO des Filterelements 3 durch das Filtermedium des Filterkörpers 4 hindurch auf eine Reinseite RL des Filterelements 3. Die erste Endscheibe 7 weist eine Aufnahmeöffnung 11 zur Aufnahme eines Sekundärelements 13, durch welche auch die Ausströmung des gereinigten Fluids erfolgt, gemäß Fig. 7 auf.

Die Endscheiben 7, 8 sind bevorzugt oval ausgebildet. Der Filterkörper 4 kann teilweise von einem Anströmschutz 12 bedeckt sein. Der Anströmschutz 12 kann ein feinmaschiges Gitter oder eine Folie sein, die mit dem Filtermedium verschweißt, verklebt oder verschmolzen ist. Insbesondere grenzt der Anströmschutz 12 an die erste Endscheibe 7 an. Der Anströmschutz 12 verhindert ein Auftreffen von in dem durch den Fluideinlass 24 eintretenden zu filternden Fluid L enthaltenden Partikeln 33 direkt auf das Filtermedium.

Die zweite Endscheibe 8 ist vorzugsweise fluiddicht, so dass durch diese kein Fluid L von der Rohseite RO auf die Reinseite RL des Filterelements 3 gelangen kann. Die zweite Endscheibe 8 kann beispielsweise Verspannelemente 34 aufweisen, von denen in der Fig. 15 lediglich eines mit einem Bezugszeichen versehen ist. Diese können als elastisch verformbare, in Längsrichtung LR von der Endscheibe 8 abstehende Fortsätze ausgebildet sein, die bei der Montage des Wartungsdeckels 23 an diesem abstützbar sind und durch die Montage des Wartungsdeckels 23 elastisch verspannt werden. Die Anzahl der Verspannelemente 34 ist beliebig. Mit Hilfe der elastisch verformbaren Verspannelemente 34 kann das Filterelement 3 in dem Aufnahmeabschnitt 19 der Filteraufnahme 2 bezüglich einer Längsrichtung LR des Filterelements 3 optimal positioniert werden. Die Verspannelemente 34 dienen weiterhin der Schwingungsdämpfung und/oder dem Toleranzausgleich. Die zweite Endscheibe 8 ist vorzugsweise materialeinstückig mit den Verspannelementen 34 ausgebildet. Beispielsweise kann die zweite Endscheibe 8 aus einem Polyurethanschaum gebildet sein.

An der ersten Endscheibe 7 und insbesondere an einer dem Filterkörper 4 abgewandten Vorderseite 9 der ersten Endscheibe 7 ist eine elastisch verformbare Dichteinrichtung 10 zum Abdichten des Filterelements 3 gegenüber dem Aufnahmeabschnitt 19 vorgesehen. Die Dichteinrichtung 10 ist federelastisch verformbar. Vorzugsweise sind die erste Endscheibe 7 und die Dichteinrichtung 10 materialeinstückig ausgeführt. Beispielsweise können die erste Endscheibe 7 und die Dichteinrichtung 10 aus einem Polyurethanschaum gefertigt sein. Die Dichteinrichtung 10 umläuft die erste Endscheibe 7 vollständig. Die Dichteinrichtung 10 befindet sich, insbesondere in Längsrichtung LR projeziert, vollständig innerhalb des Querschnittes des Filterkörpers 4.

Die Dichteinrichtung 10 weist, wie in der Fig. 16 gezeigt, zwei einander gegenüberliegend angeordnete erste konvexe Krümmungsabschnitte 35, 36 auf. Die ersten Krümmungsabschnitte 35, 36 weisen jeweils einen ersten Krümmungsradius R35, R36 auf. Die Krümmungsradien R35 und R36 sind vorzugsweise gleich groß. Die Krümmungsradien R35 bzw. R36 weisen Krümmungsmittelpunkte M35 bzw. M36 auf. Die Krümmungsmittelpunkte M35 und M36 liegen auf einer gemeinsamen Geraden 37.

Die Dichteinrichtung 10 weist weiterhin zwei einander gegenüberliegend angeordnete zweite konvexe Krümmungsabschnitte 38, 39 auf. Die ersten Krümmungsabschnitte 35, 36 und die zweiten Krümmungsabschnitte 38, 39 sind materialeinstückig miteinander verbunden. Die zweiten Krümmungsabschnitte 38, 39 weisen zweite Krümmungsradien R38, R39 auf. Die zweiten Krümmungsradien R38, R39 sind gleich. Krümmungsmittelpunkte M38 und M39 der Krümmungsradien R38 und R39 liegen auf einer gemeinsamen Gerade 40. Die Gerade 40 ist senkrecht zu der Geraden 37 angeordnet. Die Gerade 37 weist eine Länge a₃₇ und die Gerade 40 weist eine Länge a₄₀ auf. Vorzugsweise teilt die Gerade 40 die Gerade 37 mittig und umgekehrt. Vorzugsweise schneiden sich die Gerade 40 die Gerade 37 in einem Mittelpunkt, durch welchen in Längsrichtung LR eine Mittelachse MA des Filterelementes 3 verläuft, die vorzugsweise bei in die Filteraufnahme 2 eingebautem Filterelement 3 in Überdeckung mit einer Mittelachse der Filteraufnahme 2 liegt. Die Dichteinrichtung 10 weist weiterhin eine Außenkontur 41 auf. Die Außenkontur 41 verläuft nicht parallel zu einer Außenkontur 42 der ersten Endscheibe 7. Die zweiten Krümmungsradien R38, R39 sind größer als die ersten Krümmungsradien R35, R36. Das Sekundärelement 13 kann eine gleichartig ausgebildete Dichteinrichtung 18 aufweisen.

In Fig. 16 ist ferner erkennbar, wie die Kontur der Dichteinrichtung 10 im Vergleich zu einer Vergleichskurve VK verläuft. Die Vergleichskurve VK verläuft in der konkreten gezeigten Ausführungsform wie auch besonders bevorzugt parallel zu Außen- und/oder Innenkontur des Filterkörpers 4 sowie zu Außen- und/oder Innenkontur der offenen Endscheibe 7 und ist zu diesen weiter bevorzugt konzentrisch. Die Vergleichskurve weist in der Mitte der zweiten Krümmungsabschnitte 38, 39 den gleichen Abstand zu Außen- und Innenkontur des Filterkörpers 4 sowie zu Außen- und Innenkontur der offenen Endscheibe 7 auf wie Innenfläche 43. Wie ferner aus der Figur 16 ersichtlich, ist die Dichteinrichtung 10 in ihrem zweiten Krümmungsabschnitt 38 stärker gekrümmt als die Vergleichskurve VK. Anders ausgedrückt weist der zweite Krümmungsabschnitt 38 der Dichteinrichtung 10 in seiner Mitte einen geringeren (bevorzugt den kleinsten) Abstand zur Außenkontur der Endscheibe 7 bzw. des Filterkörpers 4 auf als an im Bereich des Übergangs von den zweiten Krümmungsabschnitten 38, 39 zu den ersten Krümmungsabschnitten 35, 36. Wie ebenfalls aus Figur 16 ersichtlich führt die oben beschriebene Geometrie dazu, dass die zweiten Krümmungsabschnitte 38, 39 der Dichteinrichtung 10 in einem Überlappungsbereich in die stärker gekrümmten Krümmungsabschnitte der Endscheibe 7 bzw. des Filterkörpers 4 hineinragen. In diesem Überlappungsbereich UL wird der Abstand der Dichteinrichtung 10 bzw. der Innenfläche 43 von der Außenkontur der Endscheibe 7 bzw. des Filterkörpers 4 maximal. Damit kann Breite der Endscheibe 7 ausgenutzt werden, um eine möglichst stark gekrümmte Dichteinrichtung 7 zu gestalten und damit eine gute Dichtwirkung zu erzielen.

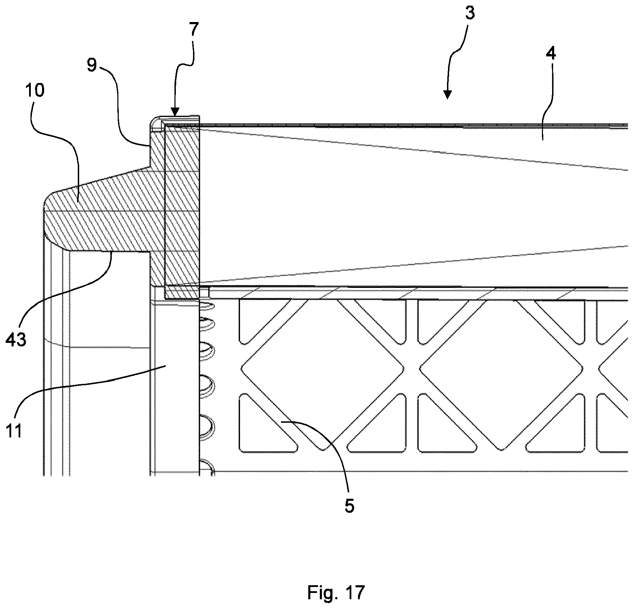

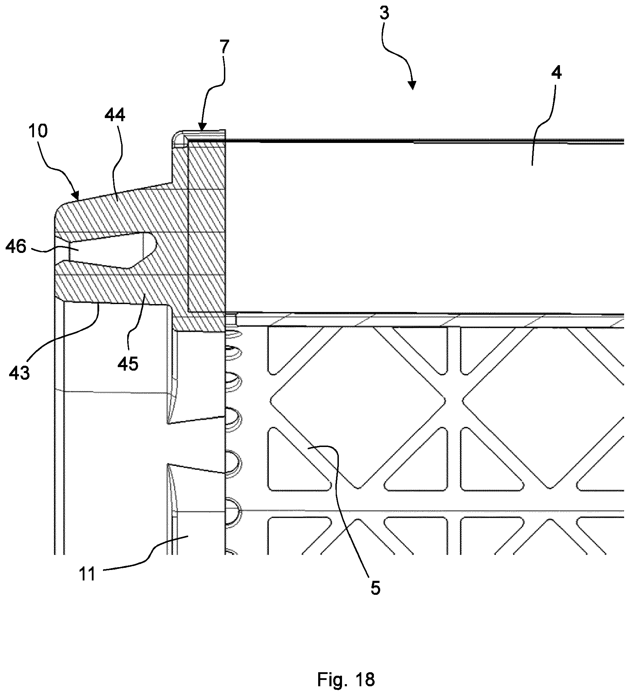

Wie die Fig. 17 und 18 zeigen, weist die Dichteinrichtung 10 eine ovalzylindrische Innenfläche 43 auf, die die Dichtfläche bildet und dichtend an dem Eingriffsbereich 27 des Aufnahmeabschnitts 19 der Filteraufnahme 2, insbesondere an einer korrespondierenden Dichtungsanlagefläche, anliegt wenn die Dichteinrichtung 10 in den Eingriffsbereich 27 eingreift. Beim Eingreifen in den Eingriffsbereich 27 wird die Dichteinrichtung 10 federelastisch verformt, insbesondere aufgeweitet, insbesondere derart, dass die Verspannung der Dichtungseinrichtung 10 gegen den Eingriffsbereich 27 ausschließlich durch die federelastische Verformung erzeugt wird. Die Innenfläche 43 liegt dabei an dem Eingriffsbereich 27 flächig und dichtend an. Mit Hilfe der Krümmungsabschnitte 35, 36, 38, 39 wird umlaufend ein konstanter Anpressdruck der Innenfläche 43 an den Eingriffsbereich 27 erzielt. Wie die Fig. 17 weiterhin zeigt, kann die Dichteinrichtung 10 im Querschnitt eine annähernd rechteckige Geometrie aufweisen. Weiterhin kann die Dichteinrichtung 10, wie in der Fig. 18 gezeigt, zwei Dichtlippen 44, 45, zwischen denen ein nutförmiger Hohlraum 46 angeordnet ist, aufweisen. Hierdurch kann einer vor Außeneinflüssen besser geschützte Dichteinrichtung 10 gebildet werden, indem ein filteraufnahmeseitiger, rohrförmiger Steg in den nutförmigen Hohlraum eingreift, derart, dass die innere und/oder äußere Dichtlippe dichtend an den rohrförmigen Steg anlegbar ist. Der Hohlraum 46 kann hierzu bevorzugt axial geöffnet sein.

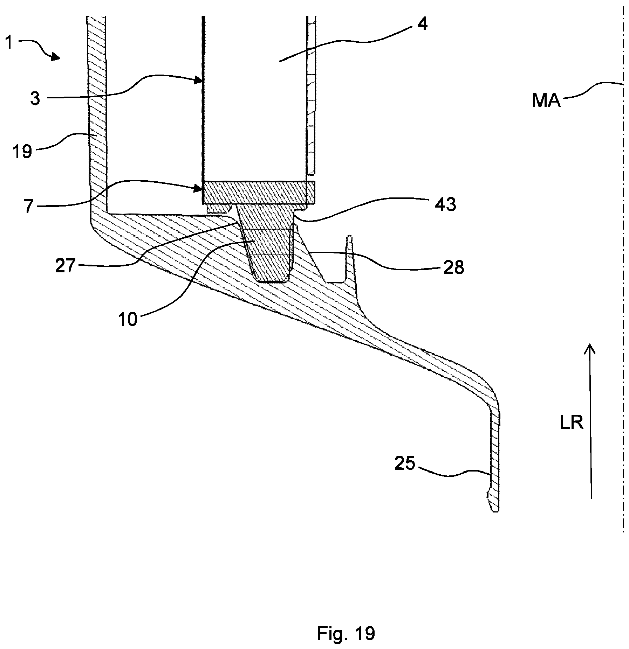

Wie die Fig. 19 und 32 im Detail zeigen, greift die Dichteinrichtung 10 in den Eingriffsbereich 27 des Aufnahmeabschnitts 19 ein. Hierbei liegt die Innenfläche 43 an dem Eingriffsbereich 27, insbesondere einer dortigen, radial nach außen weisenden, ovalzylindrischen Dichtungsanlagefläche 270 (siehe Fig. 32), flächig und dichtend an. Die Dichteinrichtung 10 dichtet das Filterelement 3 gegenüber dem Aufnahmeabschnitt 19 also radial nach innen ab. Unter "innen" ist vorliegend eine Richtung auf den Fluidauslass 25 zuweisend zu verstehen.

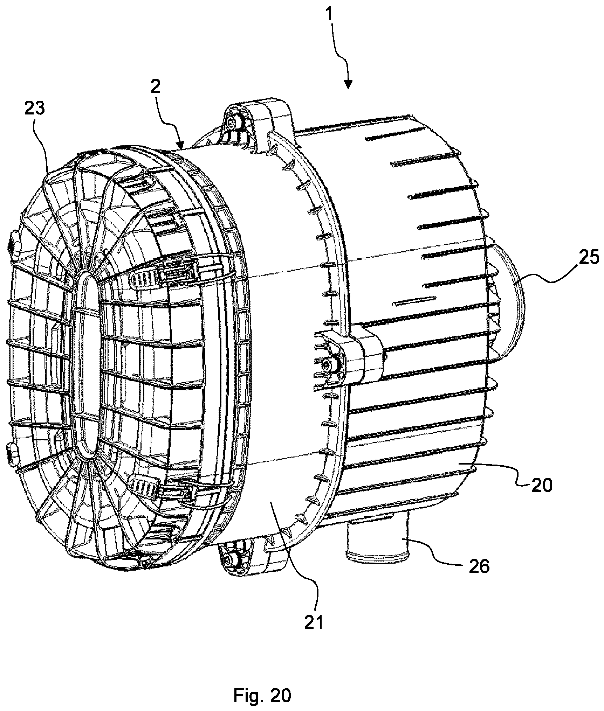

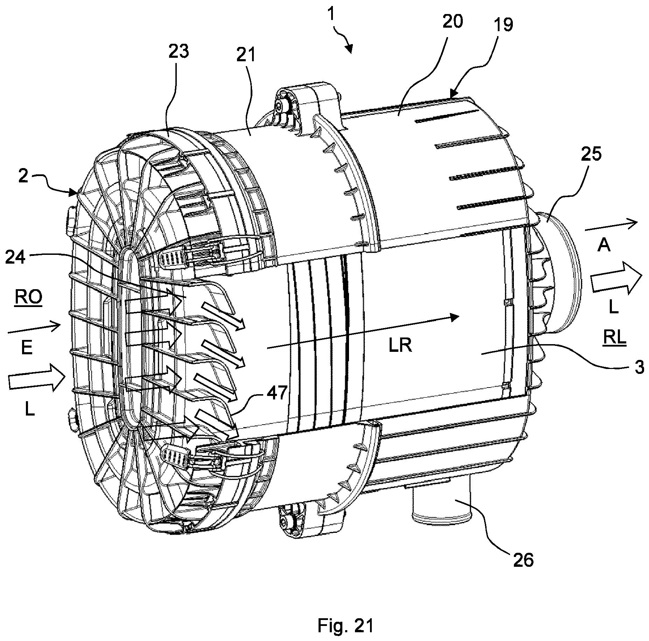

Die Fig. 20 zeigt in einer schematischen perspektivischen Ansicht eine weitere Ausführungsform einer Filteranordnung 1. Die Fig. 21 zeigt die Filteranordnung 1 gemäß der Fig. 20 in einer schematischen Teilschnittansicht. Die Filteranordnung 1 umfasst eine Filteraufnahme 2 und ein in der Filteraufnahme 2 angeordnetes Filterelement 3. Ein Fluideinlass 24 der Filteraufnahme 2 ist so orientiert, dass eine Einströmrichtung E von zu filterndem Fluid L in Richtung einer Längsrichtung LR des Filterelements 3 orientiert ist. Der Fluideinlass 24 ist vorzugsweise an einem Wartungsdeckel 23 der Filteraufnahme 2 angeordnet. Es kann eine beliebige Anzahl an Fluideinlässen 24 vorgesehen sein.

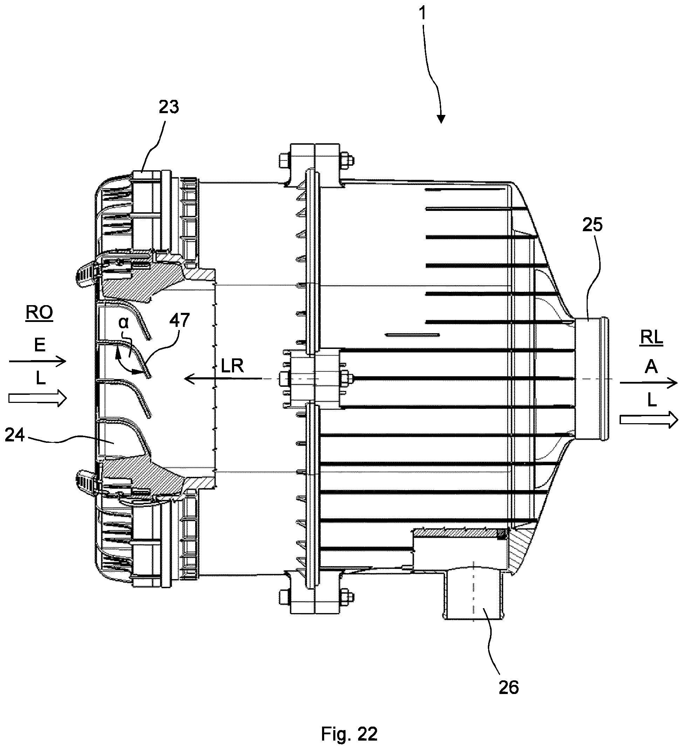

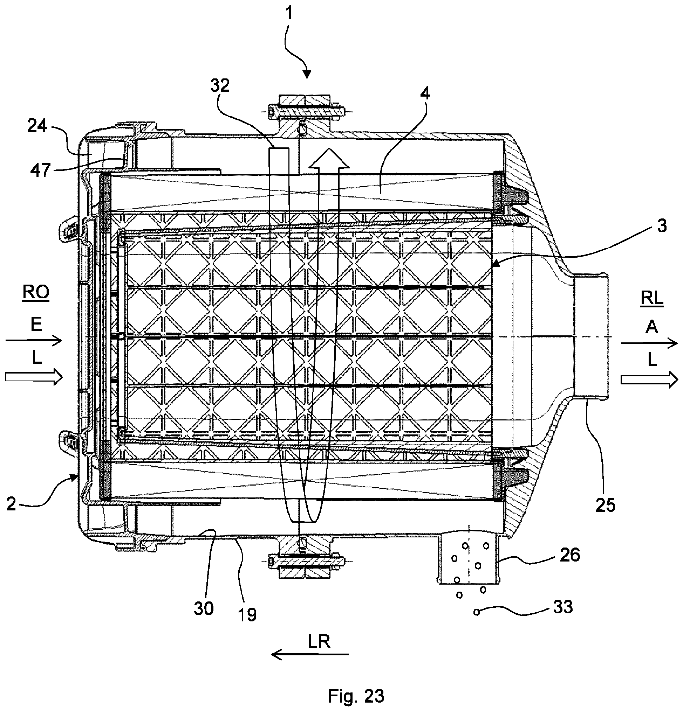

Wie die Fig. 21 bis 24 zeigen, weist jeder Fluideinlass 24 ein Leitelement 47 zum Umlenken des Fluids L auf. Jedes Leitelement 47 weist einen Krümmungswinkel α auf. Die Leitelemente 47 sind dazu eingerichtet, das einströmende, zu filternde Fluid L so umzulenken, dass dieses, wie in der Fig. 23 mit Hilfe eines Pfeils 32 gezeigt, das Filterelement 3 schraubenförmig umströmt. Hierbei wird das Filterelement 3 tangential angeströmt. Hierdurch werden an einer Wandung 30 eines Aufnahmeabschnitts 19 der Filteraufnahme 2 Partikel 33 abgeschieden, die über eine Partikelaustragsöffnung 26 der Filteraufnahme 2 aus der Filteraufnahme 2 abführbar sind.

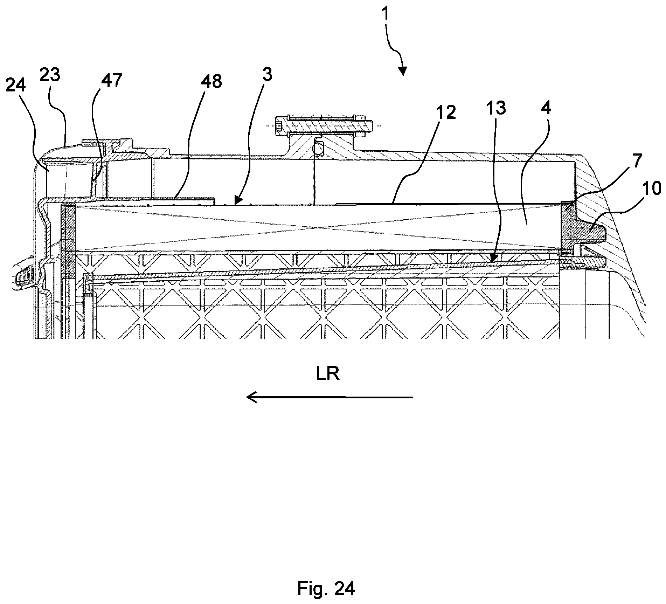

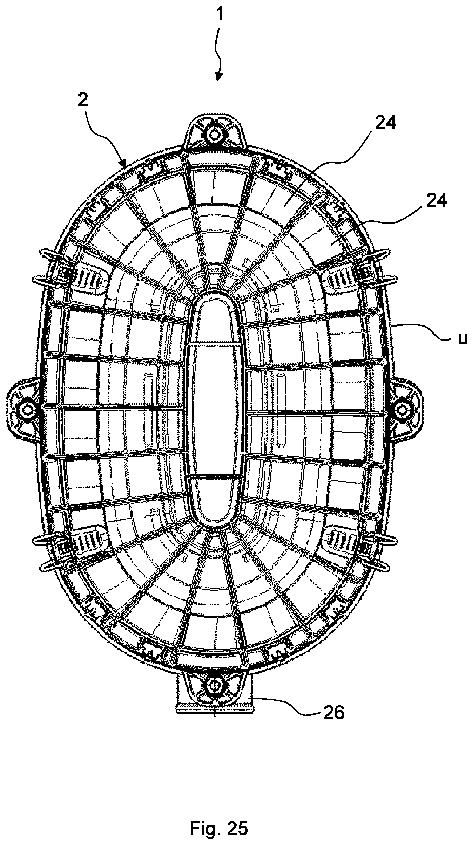

Die Leitelemente 47 können als Leitschaufeln ausgebildet sein. Vorzugsweise ist um einen Umfang u (Fig. 25) der Filteraufnahme 2 verteilt eine beliebige Anzahl an Fluideinlässen 24 vorgesehen. Der Krümmungswinkel α der Leitelemente 47 kann umlaufend um das Filterelement 3 variiert werden, insbesondere um eine gleichmäßig umlaufende Strömung zu erzeugen. Der Wartungsdeckel 23 kann weiterhin einen in der Fig. 24 gezeigten rohrförmigen Anströmschutz 48 aufweisen, der materialeinstückig mit dem Wartungsdeckel 23 ausgebildet ist. Der Anströmschutz 48 verhindert ein direktes Anströmen des Filterelements 3 mit dem zu filternden Fluid L, insbesondere indem er die Fluideinlässe 24 vom Filterelement 3 derart trennt, dass verhindert wird, dass Partikel 33 direkt auf das Filtermedium auftreffen.

Die Fig. 25 zeigt eine Aufsicht auf die Filteranordnung 1. Wie die Fig. 25 zeigt, können eine Vielzahl an Fluideinlässen 24 vorgesehen sein, von denen in der Fig. 25 lediglich zwei mit einem Bezugszeichen versehen sind. Ein Öffnungsquerschnitt der Fluideinlässe 24 kann über den Umfang u der Filteraufnahme 2 variieren. Beispielsweise können Öffnungsquerschnitte der Fluideinlässe 24 in Bereichen mit starker Krümmung des Filterelements 3 größer oder kleiner sein als in Bereichen des Filterelements 3, in denen dieses eine geringe Krümmung aufweist.

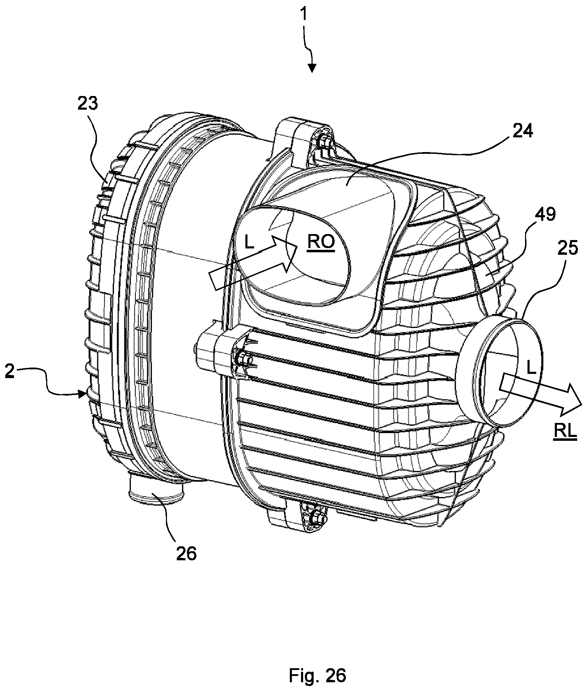

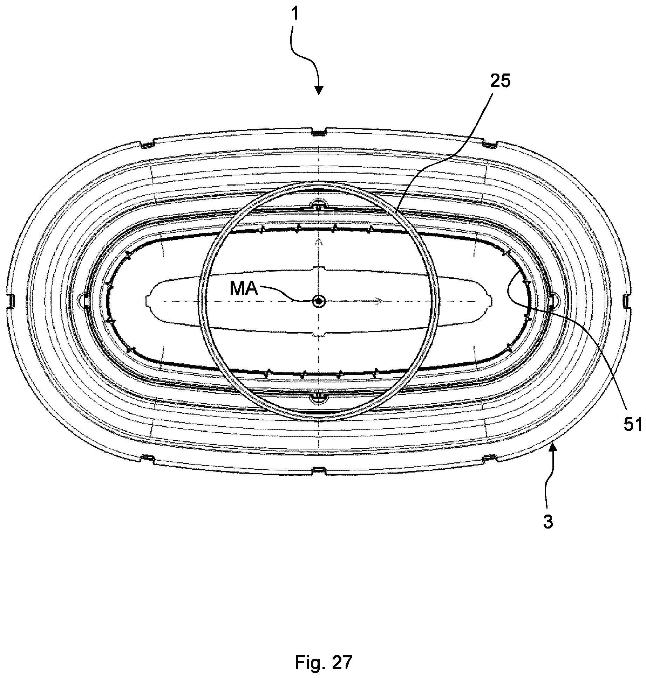

Die Fig. 26 zeigt eine schematische perspektivische Ansicht einer weiteren Ausführungsform einer Filteranordnung 1. Die Fig. 27 zeigt eine Rückansicht der Filteranordnung 1. Die Filteranordnung 1 umfasst eine Filteraufnahme 2. Die Filteraufnahme 2 gemäß der Fig. 26 unterscheidet sich von der Filteraufnahme 2 gemäß der Fig. 1 durch einen modifizierten Übergangsabschnitt 49.

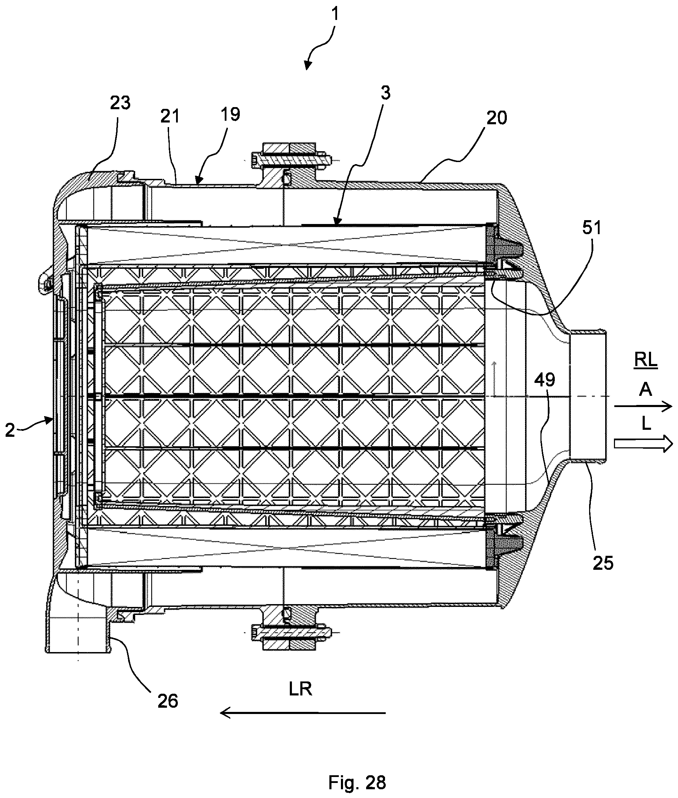

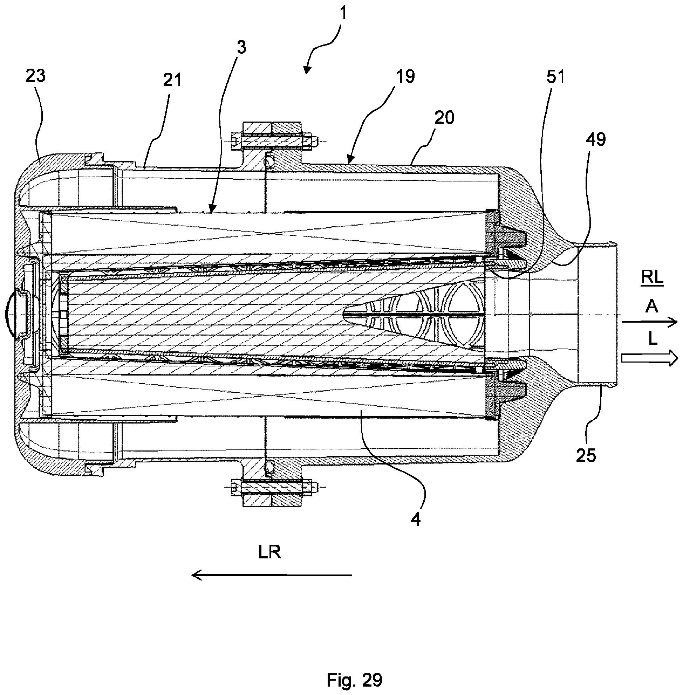

Wie die Fig. 27 zeigt, ist eine Fluidaustrittsöffnung 51 des Filterelements 3 oval und ein Fluidauslass 25 der Filteraufnahme 2 kreisförmig. Der Fluidauslass 25 weist dem Filterelement 3 abgewandt einen kreisrunden Querschnitt und dem Filterelement 3 zugewandt einen ovalen Querschnitt auf. Der kreisrunde Querschnitt des Fluidauslasses 25 auf der dem Filterelement 3 abgewandten Seite weist bevorzugt einen Durchmesser auf, der größer ist als der kleine Durchmesser des ovalen Querschnitts auf der dem Filterelement 3 zugewandten Seite des Fluidauslasses 25 und/oder größer ist als der Durchmesser der Dichteinrichtung 18 in der kleineren Ausdehnung (in Höhenrichtung hr). Wie die Fig. 28 und 29 in zwei schematischen Schnittansichten der Filteranordnung 1 zeigen, wird ein Übergang zwischen dem runden Fluidauslass 25 und der ovalen Fluidaustrittsöffnung 51 des Filterelements 3 durch einen geschwungenen Übergangsabschnitt 49 erreicht, der zwischen dem Fluidauslass 25 und der Fluidaustrittsöffnung 51 des Filterelements 3 angeordnet ist. Ein Vorteil der ovalen Geometrie der Fluidaustrittsöffnung 51 des Filterelements 3 ist dessen große Querschnittsfläche. Hierdurch ergibt sich trotz der in der Fig. 29 gezeigten Einschnürung zwischen dem Fluidauslass 25 und der Fluidaustrittsöffnung 51 des Filterelements 3 nur ein geringer nachteiliger Effekt auf den Druckverlust.

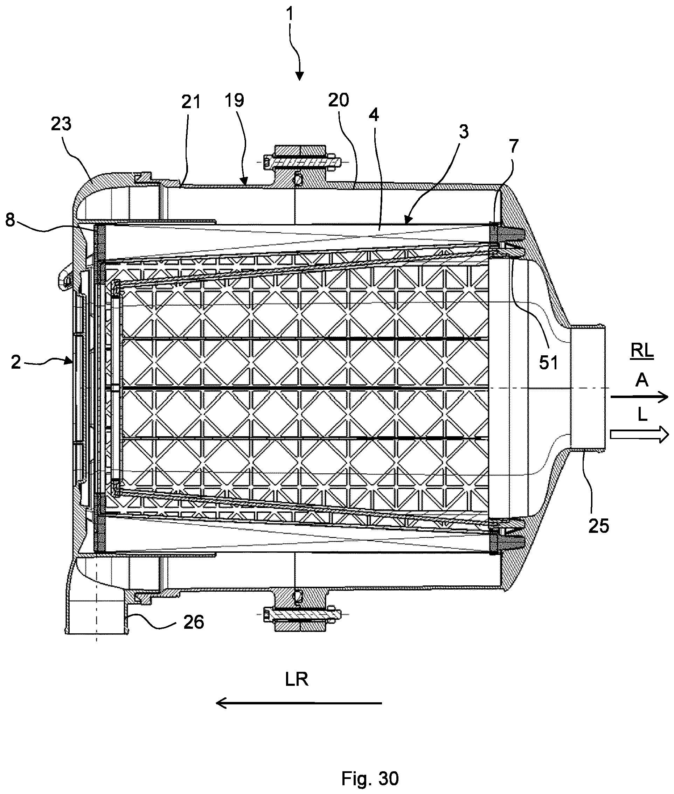

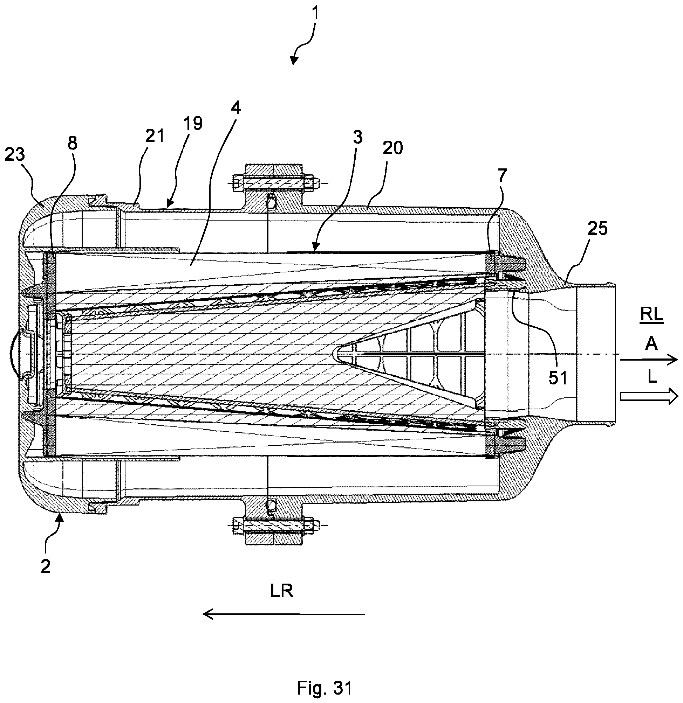

Das Filterelement 3 kann, wie in den Fig. 30 und 31 gezeigt, weiterhin innenseitig konisch zulaufen, das heißt ein Querschnitt eines Filtermediums 4 des Filterelements 3 ausgehend von einer ersten Endscheibe 7 in Richtung einer zweiten Endscheibe 8 des Filterelements 3 vergrößert sich. Hierdurch kann im Vergleich zu einem nicht konisch zulaufenden Filterkörper 4 eine vergrößerte Fluidaustrittsöffnung 51 des Filterelements 3 erreicht werden.

### Verwendete Bezugszeichen:

- 1: Filteranordnung
- 2: Filteraufnahme oder Filtergehäuse
- 3: Filterelement
- 4: Filterkörper
- 5: Mittelrohr
- 6: Fadenwickel
- 7: Endscheibe, insbesondere offene Endscheibe
- 8: Endscheibe, insbesondere geschlossene Endscheibe
- 9: Vorderseite
- 10: Dichteinrichtung
- 11: Aufnahmeöffnung
- 12: Anströmschutz
- 13: Sekundärelement
- 14: Filtermedium des Sekundärelements
- 15: Endscheibe des Sekundärelement, insbsondere offen
- 16: Endscheibe des Sekundärelements, insbesondere geschlossen
- 17: Mittelrohr des Sekundärelements
- 18: Dichteinrichtung des Sekundärelements
- 19: Aufnahmeabschnitt der Filteraufnahme
- 20: Gehäuseteil
- 21: Gehäuseteil
- 22: Befestigungsmittel
- 23: Wartungsdeckel
- 24: Fluideinlass
- 25: Fluidauslass
- 26: Partikelaustragsöffnung
- 27: Eingriffsbereich, insbesondere für die Dichteinrichtung 10 des Filterelements 3
- 28: Eingriffsbereich, insbesondere für die Dichteinrichtung 18 des Sekundärelements 13
- 29: Mantelfläche, insbesondere des Filterkörpers 4
- 30: Wandung, insbesondere des Aufnahmeabschnittes 19
- 31: Wandung, insbesondere zur Strömungsleitung innerhalb der Filteraufnahme
- 32: Pfeil, insbesondere in Umströmungsrichtung um das Filterelement 3
- 33: Partikel
- 34: Verspannelement
- 35: Krümmungsabschnitt, insbesondere kleinerer Krümmung
- 36: Krümmungsabschnitt, insbesondere kleinerer Krümmung
- 37: Gerade
- 38: Krümmungsabschnitt, insbesondere größerer Krümmung
- 39: Krümmungsabschnitt, insbesondere größerer Krümmung
- 40: Gerade, insbesonder kurze Mittelgerade
- 41: Außenkontur, insbesondere der Dichteinrichtung 10
- 42: Außenkontur, insbesondere der Endscheibe 7 und/oder 8
- 43: Innenfläche, insbesonder der Dichteinrichtung 10, insbesondere Dichtfläche
- 44: Dichtlippe, insbesondere mit radial innenliegender Dichtkante oder Dichtfläche
- 45: Dichtlippe, insbesondere mit radial außen oder innen liegender Dichtkante oder Dichtfläche
- 46: Hohlraum, insbesondere Nut zwischen den Dichtlippen 44, 45
- 47: Leitelement
- 48: Anströmschutz, insbesondere am Wartungsdeckel 23
- 49: Übergangsabschnitt, insbesondere am Fluideinlass 24
- 50: Krümmung
- 51: Fluidaustrittsöffnung, insbesondere durch die Endscheibe 15 des Sekundär-elements 13
- 270: Dichtungsanlagefläche des Eingriffsbereichs 27
- 280: Dichtungsanlagefläche des Eingriffsbereichs 28

- a: Abstand
- A: Ausströmrichtung
- a37: Länge
- a40: Länge
- b: Breite
- br: Breitenrichtung
- E: Einströmrichtung
- h: Höhe
- hr: Höhenrichtung
- L: Fluid
- LR: Längsrichtung
- MA: Mittelachse
- M35: Krümmungsmittelpunkt
- M36: Krümmungsmittelpunkt
- M38: Krümmungsmittelpunkt
- M39: Krümmungsmittelpunkt
- RE: Reinseite
- RO: Rohseite
- R35: Krümmungsradius
- R36: Krümmungsradius
- R38: Krümmungsradius
- R39: Krümmungsradius
- u: Umfang
- UL: Überlappungsbereich
- VK: Vergleichskurve
- α: Krümmungswinkel

## Patentansprüche

1. Filterelement (3), das in einer Längsrichtung (LR) desselben einen ovalen Querschnitt aufweist, mit einem insbesondere radial durchströmbaren, ovalen Filterkörper (4) und einer umlaufenden Dichteinrichtung (10) zum insbesondere radialen Abdichten des Filterelements (3) gegenüber einer Filteraufnahme (2) für das Filterelement (3), wobei die Dichteinrichtung (3) zwei einander gegenüberliegend angeordnete erste Krümmungsabschnitte (35, 36) und zwei einander gegenüberliegend angeordnete zweite Krümmungsabschnitte (38, 39) aufweist, wobei die ersten Krümmungsabschnitte (35, 36) jeweils einen ersten Krümmungsradius (R35, R36) und die zweiten Krümmungsabschnitte (38, 39) jeweils einen zweiten Krümmungsradius (R38, R39) aufweisen und wobei sich der erste Krümmungsradius (R35, R36) von dem zweiten Krümmungsradius (R38, R39) unterscheidet.

2. Filterelement nach Anspruch 1, wobei Krümmungsmittelpunkte (M35, M36) der ersten Krümmungsradien (R35, R36) auf einer ersten Geraden (37) angeordnet sind, wobei Krümmungsmittelpunkte (M38, M39) der zweiten Krümmungsradien (R38, R39) auf einer zweiten Geraden (40) angeordnet sind und wobei die erste Gerade (37) senkrecht zu der zweiten Geraden (40) positioniert ist.

3. Filterelement nach Anspruch 2, wobei die zweite Gerade (40) mittig zwischen den Krümmungsmittelpunkten (M35, M36) der ersten Krümmungsradien (R35, R36) und/oder die erste Gerade (37) mittig zwischen den Krümmungsmittelpunkten (M38, M39) der zweiten Krümmungsradien (R38, R39) angeordnet ist.

4. Filterelement nach einem der Ansprüche 1 bis 3, wobei das Filterelement (3) eine Endscheibe (7) und einen mit der Endscheibe (7) verbundenen Filterkörper (4) aufweist und wobei die Dichteinrichtung (10) auf einer dem Filterkörper (4) abgewandten Vorderseite (9) der Endscheibe (7) vorgesehen ist.

5. Filterelement nach Anspruch 4, wobei die Dichteinrichtung (10), insbesondere deren Außenkontur (41) und/oder deren Innenfläche (43) oder Dichtfläche nicht parallel zu einer Außenkontur (42) der Endscheibe (7) und/oder der Mantelfläche (29) des Filterkörpers (4) angeordnet ist.

6. Filterelement nach Anspruch 4 oder 5, wobei das Filterelement (3) einen den Filterkörper (4) zumindest abschnittsweise umhüllenden Anströmschutz (12) aufweist.

7. Filterelement nach Anspruch 6, wobei der Anströmschutz (12) mit dem Filterkörper (4) und/oder der Endscheibe (7) verklebt, verschweißt oder verschmolzen ist.

8. Filterelement nach Anspruch 6 oder 7, wobei der Anströmschutz (12) fluiddicht ist.

9. Filterelement nach einem der Ansprüche 6 bis 8, wobei der Anströmschutz (12) ringförmig um den Filterkörper (4) umläuft.

10. Filterelement (3) insbesondere nach einem der vorhergehenden Ansprüche, aufweisend einen durch einen Filterkörper (4) aus einem Filtermedium definierten ovalen Querschnitt mit zwei ersten gegenüberliegenden Krümmungsabschnitten mit stärkerer Krümmung, die durch zwei zweite gegenüberliegende, verglichen mit den ersten Krümmungsabschnitten geringer gekrümmten Krümmungsabschnitten miteinander verbunden sind, das Filterelement (3) weiter aufweisend eine oval umlaufende Dichteinrichtung (10) zum insbesondere radialen Abdichten des Filterelementes (3) gegenüber einer Filteraufnahme (2), wobei die Dichteinrichtung (3) zwei einander gegenüberliegend angeordnete erste Krümmungsabschnitte (35, 36) mit stärkerer Krümmung und zwei einander gegenüberliegend angeordnete, verglichen mit den ersten Krümmungsabschnitten geringer gekrümmte zweite Krümmungsabschnitte (38, 39) aufweist, wobei die zweiten Krümmungsabschnitte (38, 39) der Dichteinrichtung (10) stärker gekrümmt sind als die zweiten Krümmungsabschnitte des durch den Filterkörper (4) definierten ovalen Querschnittes.

11. Filterelement nach einem der vorhergehenden Ansprüche, wobei die die zweiten Krümmungsabschnitte (38, 39) der Dichteinrichtung (10) stärker gekrümmt sind als eine hinsichtlich ihrer Position auf der Endscheibe (7) vergleichbare, zur Innen- und/oder Außenkontur (42) von offener Endscheibe (7) und/oder Filterkörper (4) im Wesentlichen parallele, insbesondere konzentrische Vergleichskurve (VK).

12. Filterelement nach einem der vorhergehenden Ansprüche, wobei die die zweiten Krümmungsabschnitte (38, 39) der Dichteinrichtung (10) stärker gekrümmt sind als Innen- und/oder Außenkontur (42) von offener Endscheibe (7) und/oder Filterkörper (4) im Bereich der zweiten Krümmungsabschnitte (38, 39).

13. Filterelement nach einem der vorhergehenden Ansprüche, wobei die die zweiten Krümmungsabschnitte (38, 39) der Dichteinrichtung (10) stärker gekrümmt sind als Innen- und Außenkontur (42) von offener Endscheibe (7) und/oder Filterkörper (4) im Bereich der zweiten Krümmungsabschnitte.

14. Filterelement nach einem der vorhergehenden Ansprüche, wobei die ersten Krümmungsabschnitte der Dichteinrichtung und/oder des Filterkörpers derart jeweils durch die zweiten Krümmungsabschnitte von Dichtung oder Filterkörper miteinander verbunden sind, dass erste und zweite Krümmungsabschnitte jeweils insbesondere stetig ineinander übergehen.

15. Filterelement nach einem der vorhergehenden Ansprüche, wobei die Dichteinrichtung (10) innerhalb einer gedachten axialen Fortsetzung der Mantelfläche (29) und/oder des Querschnittes des Filterkörpers (4) und/oder der Außenkontur (42) einer offenen Endscheibe (7) in Längsrichtung (LR) angeordnet ist.

16. Filterelement nach einem der vorhergehenden Ansprüche, wobei die Dichteinrichtung (10), insbesondere die Innenfläche (43) der Dichtung, im Mittelbereich der geringer gekrümmten Krümmungsabschnitte des Filterkörpers und/oder der Dichteinrichtung (10) einen geringeren Abstand zur Mantelfläche (29) und/oder der Außenkontur (42) einer offenen Endscheibe (7) aufweist als im Übergangsbereich zwischen stark und gering gekrümmten Krümmungsabschnitten des Filterkörpers und/oder der Dichteinrichtung.

17. Filteranordnung (1) mit einer Filteraufnahme (2) und einem Filterelement (3) nach einem der Ansprüche 1 bis 16, das in einem Aufnahmeabschnitt (19) der Filteraufnahme (2) aufgenommen ist.

18. Filteranordnung nach Anspruch 17, wobei der Aufnahmeabschnitt (19) einen Eingriffsbereich (27) aufweist, in den eine umlaufende Dichteinrichtung (10) des Filterelements (3) eingreift und wobei die Dichteinrichtung (10) mit einer Innenfläche (43) an dem Eingriffsbereich (27) anliegt.
